# EUROPEAN PATENT APPLICATION

(11) **EP 4 668 862 A1**
(43) Date of publication of application: **24.12.2025**
(21) Application number: 23921900.9
(22) Date of filing: 16.02.2023
(51) Int. Cl.: H04W 36/08, H04W 72/53

(54) **CONDITION-BASED MOBILITY CONFIGURATION METHOD AND APPARATUS, DEVICE AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Dehns Germany Partnerschaft mbB
(86) International application number: PCT/CN2023/076602
(87) International publication number: WO 2024/168746

(57) **Abstract**

The present application relates to the field of mobile communications. Disclosed are a condition-based mobility configuration method and apparatus, a device and a storage medium. The method comprises: receiving a condition-based mobility configuration sent by a network device, wherein the condition-based mobility configuration comprises a first mobility configuration and a second mobility configuration, with the first mobility configuration being a configuration for master cell group (MCG)/primary cell (PCell) mobility, and the second mobility configuration being a configuration for secondary cell group (SCG)/primary secondary cell (PSCell) mobility; and performing associated storage on the first mobility configuration corresponding to a candidate MCG/PCell and the second mobility configuration corresponding to a candidate SCG/PSCell. By means of the present application, a terminal can determine a second mobility configuration corresponding to different candidate SCGs/PSCells without the need for executing a mobility operation of a first mobility configuration.

## Description

### TECHNICAL FIELD

The present application relates to the field of mobile communications and, in particular, to a conditional mobility configuration method and apparatus, a device and a storage medium.

### BACKGROUND

To address problems such as data rate fluctuations, signaling overhead, and latency caused by frequent handovers of a terminal, the 5th generation mobile communication technology (5G) new radio (NR) introduces a plurality of mobility enhancement technologies, such as the conditional handover (CHO), the conditional primary/secondary cell addition/change (conditional PSCell addition/change, CPAC), the cell group selective activation, and the layer 1 or layer 2 triggered mobility (L1/L2-triggered mobility, LTM), etc.

The mobility can be further enhanced through the joint application of multiple mobility enhancement technologies described above. However, the specific implementation of the joint application of multiple mobility enhancement technologies requires further discussion and research.

### SUMMARY

Embodiments of the present application provides a conditional mobility configuration method and apparatus, a device and a storage medium. The technical solutions are as follows.

According to an aspect of the present application, there is provided a conditional mobility configuration method. The method is performed by a terminal. The method includes:
receiving a conditional mobility configuration sent by a network device, where the conditional mobility configuration includes a first mobility configuration and a second mobility configuration, the first mobility configuration is a configuration for master cell group (MCG)/primary cell (PCell) mobility, and the second mobility configuration is a configuration for secondary cell group (SCG)/primary secondary cell (PSCell) mobility; and performing associative storage on the first mobility configuration corresponding to a candidate MCG/PCell and the second mobility configuration corresponding to a candidate SCG/PSCell.

According to another aspect of the present application, there is provided a conditional mobility configuration method. The method is performed by a network device. The method includes:
sending a conditional mobility configuration to a terminal, where the conditional mobility configuration includes a first mobility configuration and a second mobility configuration;
where the first mobility configuration is a configuration for MCG/PCell mobility; the second mobility configuration is a configuration for SCG/PSCell mobility; and the first mobility configuration corresponding to a candidate MCG/PCell, and the second mobility configuration corresponding to a candidate SCG/PSCell are used for the terminal to perform associative storage.

According to another aspect of the present application, there is provided a conditional mobility configuration method. The method is performed by a target master node (T-MN). The method includes:
sending a conditional mobility configuration to a source master node (S-MN);
where the mobility configuration includes one or more of: an execution condition of a mobility operation, a measurement configuration corresponding to the execution condition of the mobility operation, a configuration of a candidate MCG/PCell, and a configuration of a candidate SCG/PSCell; and the mobility configuration is used for the S-MN to update a measurement configuration of a terminal, and is forwarded by the S-MN to the terminal.

According to another aspect of the present application, there is provided a conditional mobility configuration method. The method is performed by an S-MN. The method includes:
receiving a conditional mobility configuration sent by a T-MN, where the mobility configuration includes one or more of: an execution condition of a mobility operation, a measurement configuration corresponding to the execution condition of the mobility operation, a configuration of a candidate MCG/PCell, and a configuration of a candidate SCG/PSCell; and
updating a measurement configuration of a terminal based on the mobility configuration, and sending the mobility configuration to the terminal.

According to another aspect of the present application, there is provided a conditional mobility configuration method. The method is performed by a terminal. The method includes:
receiving a conditional mobility configuration sent by an S-MN;
where the mobility configuration is sent by a T-MN to the S-MN; the mobility configuration includes one or more of: an execution condition of a mobility operation, a measurement configuration corresponding to the execution condition of the mobility operation, a configuration of a candidate MCG/PCell, and a configuration of a candidate SCG/PSCell; and the mobility configuration is used for updating a measurement configuration of the terminal.

According to another aspect of the present application, there is provided a conditional mobility configuration apparatus. The apparatus includes:
a receiving module, configured to receive a conditional mobility configuration sent by a network device, where the conditional mobility configuration includes a first mobility configuration and a second mobility configuration, the first mobility configuration is a configuration for MCG/PCell mobility, and the second mobility configuration is a configuration for SCG/PSCell mobility; and
a storage module, configured to perform associative storage on the first mobility configuration corresponding to a candidate MCG/PCell and the second mobility configuration corresponding to a candidate SCG/PSCell.

According to another aspect of the present application, there is provided a conditional mobility configuration apparatus. The apparatus includes:
a sending module, configured to send a conditional mobility configuration to a terminal, where the conditional mobility configuration includes a first mobility configuration and a second mobility configuration;
where the first mobility configuration is a configuration for MCG/PCell mobility; the second mobility configuration is a configuration for SCG/PSCell mobility; and the first mobility configuration corresponding to a candidate MCG/PCell, and the second mobility configuration corresponding to a candidate SCG/PSCell are used for the terminal to perform associative storage.

According to another aspect of the present application, there is provided a conditional mobility configuration apparatus. The apparatus includes:
a sending module, configured to send a conditional mobility configuration to an S-MN;
where the mobility configuration includes one or more of: an execution condition of a mobility operation, a measurement configuration corresponding to the execution condition of the mobility operation, a configuration of a candidate MCG/PCell, and a configuration of a candidate SCG/PSCell; and the mobility configuration is used for the S-MN to update a measurement configuration of a terminal, and is forwarded by the S-MN to the terminal.

According to another aspect of the present application, there is provided a conditional mobility configuration apparatus. The apparatus includes:
a receiving module, configured to receive a conditional mobility configuration sent by a T-MN, where the mobility configuration includes one or more of: an execution condition of a mobility operation, a measurement configuration corresponding to the execution condition of the mobility operation, a configuration of a candidate MCG/PCell, and a configuration of a candidate SCG/PSCell; and
a sending module, configured to update a measurement configuration of a terminal based on the mobility configuration, and send the mobility configuration to the terminal.

According to another aspect of the present application, there is provided a conditional mobility configuration apparatus. The apparatus includes:
a receiving module, configured to receive a conditional mobility configuration sent by an S-MN;
where the mobility configuration is sent by a T-MN to the S-MN; the mobility configuration includes one or more of: an execution condition of a mobility operation, a measurement configuration corresponding to the execution condition of the mobility operation, a configuration of a candidate MCG/PCell, and a configuration of a candidate SCG/PSCell; and the mobility configuration is used for updating a measurement configuration of the apparatus.

According to another aspect of the present application, there is provided a terminal. The terminal includes a processor, a transceiver connected to the processor, and a memory configured to store an executable instruction of the processor; where the processor is configured to load and execute the executable instruction to implement the conditional mobility configuration method described in the above aspects.

According to another aspect of the present application, there is provided a network device. The network device includes a processor, a transceiver connected to the processor, and a memory configured to store an executable instruction of the processor; where the processor is configured to load and execute the executable instruction to implement the conditional mobility configuration method described in the above aspects.

According to another aspect of the present application, there is provided a computer-readable storage medium. The readable storage medium stores an executable instruction, where the executable instruction is loaded and executed by a processor to implement the conditional mobility configuration method described in the above aspects.

According to another aspect of the present application, there is provided a chip. The chip includes a programmable logic circuit and/or a program instruction. The chip, when run on a computer device, is configured to implement the conditional mobility configuration method described in the above aspects.

According to another aspect of the present application, there is provided a computer program product or a computer program. The computer program product or the computer program includes a computer instruction. The computer instruction is stored in a computer-readable storage medium. A processor reads and executes the computer instruction from the computer-readable storage medium, causing a computer device to perform the conditional mobility configuration method described in the above aspects.

The technical solutions provided in the present application have at least the following beneficial effects.

When the first mobility configuration and the second mobility configuration are jointly configured, through the associative storage performed by the terminal on the first mobility configuration of the candidate MCG/PCell and the second mobility configuration of the candidate SCG/PSCell corresponding to the candidate MCG/PCell, the terminal can be enabled to determine the second mobility configuration corresponding to a different candidate SCG/PSCell without executing the mobility operation of the first mobility configuration. For example, the terminal can determine the CPAC configuration of a different candidate SCG/PSCell without executing the CHO. This can enable the terminal to simultaneously execute the mobility operation of the first mobility configuration and the mobility operation of the second mobility configuration.

### BRIEF DESCRIPTION OF THE DRAWINGS

To more clearly illustrate the technical solutions in the embodiments of the present application, the following will provide a brief introduction to the accompanying drawings to be used in the description of the embodiments. It is apparent that the accompanying drawings described below are merely some embodiments of the present application. For those ordinary skilled in the art, other accompanying drawings can be obtained based on these accompanying drawings without creative labor.
FIG. 1 is a schematic diagram of a system architecture of an MR-DC with EPC provided in an exemplary embodiment of the present application.
FIG. 2 is a schematic diagram of a system architecture of an MR-DC with 5GC provided in an exemplary embodiment of this application.
FIG. 3 is a schematic diagram of cells in a dual connectivity provided in an exemplary embodiment of the present application.
FIG. 4 is a schematic diagram of a communication system provided in an exemplary embodiment of the present application.
FIG. 5 is a flowchart of a conditional mobility configuration method provided in an exemplary embodiment of the present application.
FIG. 6 is a flowchart of a conditional mobility configuration method provided in an exemplary embodiment of the present application.
FIG. 7 is a flowchart of a conditional mobility configuration method provided in an exemplary embodiment of the present application.
FIG. 8 is a flowchart of a conditional mobility measurement method provided in an exemplary embodiment of the present application.
FIG. 9 is a flowchart of a conditional mobility configuration processing method provided in an exemplary embodiment of the present application.
FIG. 10 is a flowchart of a conditional mobility configuration method provided in an exemplary embodiment of the present application.
FIG. 11 is a flowchart of a conditional mobility configuration method provided in an exemplary embodiment of the present application.
FIG. 12 is a flowchart of a conditional mobility configuration method provided in an exemplary embodiment of the present application.
FIG. 13 is a flowchart of a conditional mobility configuration method provided in an exemplary embodiment of the present application.
FIG. 14 is a flowchart of a conditional mobility configuration method provided in an exemplary embodiment of the present application.
FIG. 15 is a flowchart of a conditional mobility configuration method provided in an exemplary embodiment of the present application.
FIG. 16 is a flowchart of a conditional mobility configuration method provided in an exemplary embodiment of the present application.
FIG. 17 is a flowchart of a conditional mobility configuration method provided in an exemplary embodiment of the present application.
FIG. 18 is a flowchart of a conditional mobility configuration method provided in an exemplary embodiment of the present application.
FIG. 19 is a flowchart of a conditional mobility configuration method provided in an exemplary embodiment of the present application.
FIG. 20 is a flowchart of a conditional mobility configuration method provided in an exemplary embodiment of the present application.
FIG. 21 is a structural block diagram of a conditional mobility configuration apparatus provided in an exemplary embodiment of the present application.
FIG. 22 is a structural block diagram of a conditional mobility configuration apparatus provided in an exemplary embodiment of the present application.
FIG. 23 is a structural block diagram of a conditional mobility configuration apparatus provided in an exemplary embodiment of the present application.
FIG. 24 is a structural block diagram of a conditional mobility configuration apparatus provided in an exemplary embodiment of the present application.
FIG. 25 is a structural block diagram of a conditional mobility configuration apparatus provided in an exemplary embodiment of the present application.
FIG. 26 is a schematic structural diagram of a communication device provided in an exemplary embodiment of the present application.

### DETAILED DESCRIPTION

To make the objectives, technical solutions, and advantages of the present application clearer, the following will provide a further detailed description for the embodiments of the present application in conjunction with the accompanying drawings.

The exemplary embodiments are described in detail herein, examples of which are indicated in the accompanying drawings. When the following description involves the accompanying drawings, the same numerals in different accompanying drawings indicate the same or similar elements unless otherwise indicated. The embodiments described in the following exemplary embodiments do not represent all embodiments consistent with the embodiments of the present application. On the contrary, they are only examples of devices and methods consistent with some aspects of the present application as detailed in the appended claims.

The terms used in the present disclosure are solely for the purpose of describing particular embodiments, but are not intended to limit the present disclosure. The singular forms of "a", "the" and "said" used in the present disclosure and the appended claims are also intended to include the plural form, unless the context clearly indicates other meanings. It should also be understood that the term "and/or" as used in this article refers to and includes any or all possible combinations of one or more of the associated listed items.

It should be understood that although the terms first, second, third, etc. may be used in the present disclosure to describe various types of information, such information should not be limited to these terms. These terms are only used to distinguish the same type of information from one another. For example, without departing from the scope of the present disclosure, the first information may also be referred to as the second information, and similarly, the second information may also be referred to as the first information. Depending on the context, the phrase "if" as used herein may be interpreted as "at the time of......", "when ......", or "in response to".

### Introduction to Multi-Radio Dual Connectivity (MR-DC)

The MR-DC is a generalized intra evolved universal terrestrial radio access (Intra-E-UTRA) dual connectivity. In some embodiments, based on the MR-DC, a terminal may use radio resources provided by two different schedulers located on two different next generation radio access network (NG-RAN) nodes connected via a non-ideal backhaul. One node provides the NR access, while the other node provides either the E-UTRA or the NR access. One node serves as the master node (MN), and the other node serves as the secondary node (SN). The MN and SN are connected to each other via a network interface, with at least the MN connected to the core network.

### (1) MR-DC with Evolved Packet Core (MR-DC with EPC)

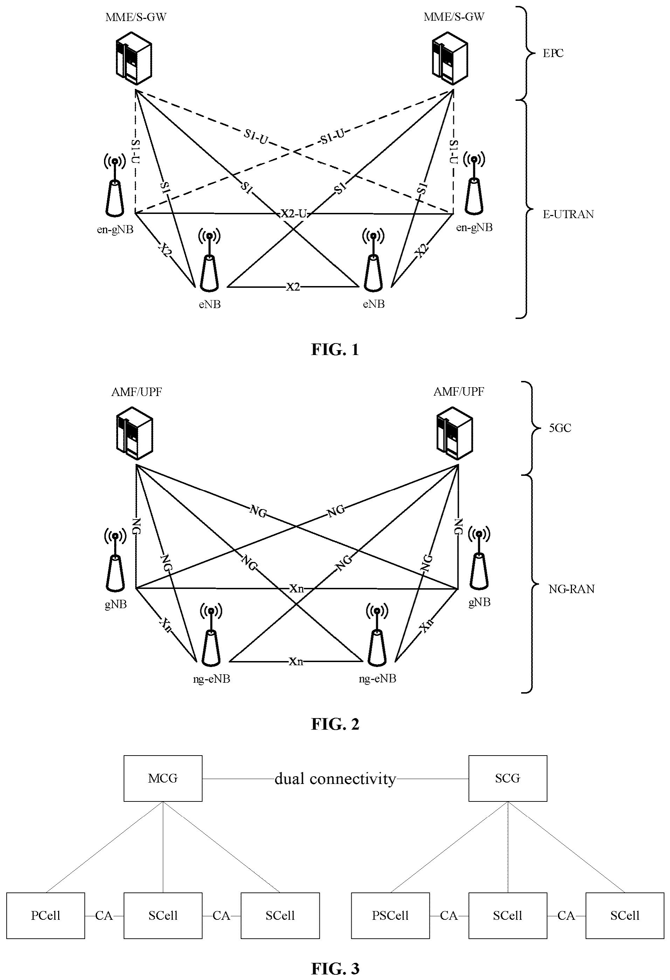

For example, FIG. 1 is a schematic diagram of a system architecture of an MR-DC with EPC provided in an exemplary embodiment of the present application. As shown in FIG. 1, the evolved universal terrestrial radio access network (E-UTRAN) supports the MR-DC through the E-UTRA-NR dual connectivity (EN-DC). Here, the terminal is connected to an eNB acting as an MN and to an en-gNB acting as an SN. The eNB is connected to the EPC via the S1 interface and to the en-gNB via the X2 interface. The en-gNB may also be connected to the EPC via the S1-U interface and to other en-gNBs via the X2-U interface. In some embodiments, the EPC of the long term evolution (LTE) system may include a mobility management entity (MME), a serving gateway (S-GW), etc.

It should be noted that the number of the communication devices shown in FIG. 1 is provided merely as an example. The number of the communication devices may be greater, and the connection relationships may also be modified according to actual circumstances. The example in FIG. 1 does not constitute a limitation on the system architecture provided in the embodiments of the present application.

### (2) MR-DC with 5G Core Network (5G Core, 5GC) (MR-DC with 5GC):

For example, FIG. 2 is a schematic diagram of a system architecture of an MR-DC with 5GC provided in an exemplary embodiment of the present application. As shown in FIG. 2, the MR-DC with 5GC may be categorized into the following three cases.

### A) E-UTRA-NR Dual Connectivity (EN-DC)

The NG-RAN supports the NG-RAN E-UTRA-NR dual connectivity, which may also be referred to as NGEN-DC in some embodiments. In this case, the terminal is connected to an ng-eNB acting as an MN and to a gNB acting as an SN. The ng-eNB is connected to the 5GC. The gNB is connected to the ng-eNB via the Xn interface.

### B) NR-E-UTRA Dual Connectivity (NE-DC)

The NG-RAN supports the NR-E-UTRA dual connectivity. In this case, the terminal is connected to a gNB acting as an MN and to an ng-eNB acting as an SN. The gNB is connected to the 5GC. The ng-eNB is connected to the gNB via the Xn interface.

### C) NR-NR Dual Connectivity (NR-DC)

The NG-RAN supports the NR-NR dual connectivity. In this case, the terminal is connected to a gNB acting as an MN and to another gNB acting as an SN. The primary gNB is connected to the 5GC via the NG interface. The two gNBs are connected to each other via the Xn interface. The secondary gNB may also be connected to the 5GC via the NG-U interface. In addition, the NR-DC may also be used for a terminal accessing a single gNB that simultaneously acts as both the MN and the SN and configures both the MCG and the SCG.

In some embodiments, the 5GC of the 5G NR system may include an access and mobility management functions (AMF), a user plane functions (UPF), etc.

It should be noted that the number of the communication devices shown in FIG. 2 is provided merely as an example. The number of the communication devices may be greater, and the connection relationships may also be modified according to actual circumstances. The example in FIG. 2 does not constitute a limitation on the system architecture provided in the embodiments of the present application.

In the dual connectivity, the terminal may access two cell groups. For example, FIG. 3 is a schematic diagram of cells in a dual connectivity provided in an exemplary embodiment of the present application. As shown in FIG. 3, in some embodiments, the two cell groups in the dual connectivity are referred to as the MCG and the SCG. In the MCG, there may be a plurality of cells, with one cell used for initiating the initial access. In some embodiments, this cell is referred to as the PCell. As the name suggests, the PCell is the most "primary" cell in the MCG. The PCell in the MCG and the secondary cell (SCell) in the MCG are aggregated via carrier aggregation (CA). The MCG includes a PCell and an SCell. In some embodiments, the SCG includes a PSCell and an SCell. Since many signaling messages are only sent on the PCell and the PSCell, for convenience of description, the relevant communication protocols also define a concept called a special cell (sPCell). The PCell and the PSCell are collectively referred to as the sPCell.

It should be noted that the number of the cells in the dual connectivity shown in FIG. 3 is provided merely as an example. The number of the cells in the MCG and the number of the cells in the SCG may also be greater, and the connection relationships may also be modified according to actual circumstances. The example in FIG. 3 does not constitute a limitation on the cells in the dual connectivity provided in the embodiments of the present application.

### Introduction to Conditional Handover (CHO)

The CHO refers to a handover that is executed by the terminal when one or more handover execution conditions are met. In some embodiments, the terminal starts evaluating the execution condition upon receiving the CHO configuration, and stops evaluating the execution condition after performing the handover (including both the legacy handover and the CHO). In some embodiments, the CHO applies to the following criteria:
· the CHO configuration includes the CHO candidate cell configuration and the execution condition;
· an execution condition may include one or two trigger events (e.g., CHO events A3/A5);
· before any CHO execution condition is met, if the terminal receives a handover (HO) command without the CHO configuration, the terminal performs the legacy handover (legacy HO) process, regardless of any previously received CHO configuration; and
· when executing the CHO, i.e., from the time the terminal starts synchronization with the target cell, the terminal does not monitor the source cell.

For example, the conditional event (CondEvent) A3 is: conditional reconfiguration candidate (cell) becomes amount of offset better than PCell/PSCell.

For example, the CondEvent A5 is: PCell/PSCell becomes worse than absolute threshold 1 and conditional reconfiguration candidate (cell) becomes better than another absolute threshold 2.

### Introduction to Conditional PSCell Addition/Change (CPAC)

The CPAC includes a conditional PSCell addition (CPA) and a conditional PSCell change (CPC).

### CPA

In some embodiments, a CPA is defined as a PSCell addition that is executed by the terminal (UE) when execution condition(s) is(are) met. The terminal (UE) starts evaluating the execution condition(s) upon receiving the CPA configuration, and stops evaluating the execution condition(s) once a PSCell addition or a PCell change is triggered.

### CPC

In some embodiments, a CPC is defined as a PSCell change that is executed by the terminal (UE) when execution condition(s) is(are) met. The terminal (UE) starts evaluating the execution condition(s) upon receiving the CPC configuration, and stops evaluating the execution condition(s) once a PSCell change or a PCell change is triggered. Intra-SN CPC without MN involvement, inter-SN CPC initiated either by the MN or the SN are supported.

### Introduction to joint Configuration of CHO and CPAC

In release 16 (R16)/release 17 (R17), conditional trigger-based mobility management is introduced. In some embodiments, the terminal implements the conditional trigger-based mobility management based on a condition configured by the network and an associated candidate cell. Once the condition is met, the terminal triggers the mobility management, and accesses the associated candidate cell of the terminal. In some embodiments, the condition configured by the network may be a specific event based on a measurement result, or a position-based or time-based event. The associated candidate cell may be a candidate PCell or a candidate PSCell, corresponding to the conditional trigger-based mobility management CHO and CPAC, respectively. Currently, in R17, an MN-initiated CHO, an MN-initiated CPA/CPC, and an SN-initiated CPC are supported.

However, R16/R17 does not support the simultaneous configuration of the CHO and the CPA/CPC. To enhance robustness and reduce the impact on terminal throughput, release 18 (R18) proposes studying a scheme combining the CHO and the CPC/CPA, and decides to include a target MCG and a candidate SCG for the CPC/CPA in the CHO. The CHO and the CPA/CPC are jointly configured, and the terminal may simultaneously execute the CHO and its corresponding CPA/CPC.

In the R18 mobility discussion, regarding the joint configuration enhancement scheme of the CHO and the CPA/CPC, the CHO and the CPAC may be initiated by the same node or different nodes. Currently, it is generally believed that the CHO should be initiated by a source MN (S-MN). However, there are many different views on the initiation node of the CPA/CPC, primarily including:
· the CPA/CPC initiated by the S-MN, where the execution condition is determined by the S-MN;
· the CPA/CPC initiated by the target MN (T-MN), where the execution condition is determined by the T-MN; and
· the CPA/CPC initiated by the source SN (S-SN), where the execution condition is determined by the S-SN.

Since the candidate SCG corresponding to the CPA/CPC needs to be associated with the candidate MCG corresponding to the CHO, it is mainly considered that the CPC/CPA should be initiated by the T-MN, and the condition of the CPA/CPC should also be configured by the T-MN.

### Introduction to Cell Group (CG) Selective Activation

In R16's CHO and R17's CPA/CPC, the terminal configured with the CHO/CPC/CPA must release the CHO/CPC/CPA configuration when completing random access to the target PCell/PSCell. Therefore, if the network does not reconfigure and reinitialize the CHO/CPC/CPA, the terminal has no opportunity to continue executing the CHO/CPC/CPA subsequently. This will increase the latency in the handover or the SCG change, and increase the signal overhead, especially in frequency range 2 (FR2) scenarios with frequent CG changes.

Therefore, in the R18 mobility enhancement, the selective activation of cell groups in the MR-DC is proposed. In some embodiments, the selective activation of cell groups may allow configurations to still be executable subsequently after a cell group (CG) change, without requiring the network to reconfigure or reinitialize the corresponding cell group selective activation configuration information, which reduces the signaling overhead and the interruption duration caused by the cell group change.

The cell group selective activation configuration information may include at least one of the following: a configuration identifier (ID), an activation condition (if any), and a configuration of a cell and/or a cell group to be activated.

Here, the selective activation of cell groups allows configurations to still be executable subsequently after a cell group change, without requiring the network to reconfigure or reinitialize the corresponding cell group selective activation configuration. Therefore, in the selective activation of cell groups, the network device may provide the terminal with a "cell group to be activated", where the "cell group to be activated" may subsequently be activated or deactivated, and the network device does not need to re-provide the configuration of cell groups.

In the selective activation of cell groups, the network device may provide the terminal device with pre-configured candidate target cell groups or target cells. Subsequently, the terminal device may activate or deactivate the pre-configured candidate cells and/or cell groups based on the corresponding activation event or the configuration (e.g., activation message) issued by the network device, and the network device does not need to re-provide the configuration of cell groups. Alternatively, in the selective activation of cell groups, after activating a new cell or a new cell group, applying a new cell configuration or a new cell group configuration, or accessing a new cell or a new cell group, the terminal does not delete the corresponding configuration information of the selective activation of cell groups.

The selective activation of cell groups may also be referred to as the cell group activation. The cell group activation may allow the corresponding configuration information to still be executable after a cell change and/or a cell group change, without requiring the network to reconfigure or reinitialize the corresponding configuration information of the cell group activation. Therefore, the selective activation of cell groups reduces the signaling overhead and the interruption duration caused by the cell group change. The configuration information of the cell group activation may include the following: a configuration ID, and a configuration of a target cell or a configuration of a target cell group. Optionally, the configuration information of the cell group activation may also include a trigger condition (or referred to as an execution condition or an activation condition).

In some embodiments, the cell group selective activation is a mobility management process, including any mobility management process in the following: through configuring of the cell group activation configuration, the terminal activating or deactivating the corresponding cell or cell group autonomously, or based on the signaling sent by the network side or the criteria specified by the protocol, or the terminal applying the corresponding cell configuration or cell group configuration, or accessing the cell or cell group.

In some embodiments, the cell group selective activation is a mobility management process, including any mobility management procedure where, after the mobility process is executed, the corresponding portion or all of the configuration information is not deleted or released. Not deleting or releasing the corresponding portion or all of the configuration information may also be called retaining the corresponding portion or all of the configuration information.

### Introduction to Layer 1 or Layer 2 Triggered Mobility (L1/L2-triggered mobility, LTM)

In the 5G system, the network side may provide the terminal with a plurality of "candidate cells (candidate cell groups)". In some embodiments, the network side may subsequently control, through the L1 signaling (e.g., downlink control information (DCI)) or the L2 signaling (e.g., media access control control element (MAC CE)), the terminal to switch between the plurality of "candidate cells (candidate cell groups)". For example, the active cell (cell group) may be switched from "candidate cell (candidate cell group)-1" to "candidate cell (candidate cell group)-2". In some embodiments, one serving cell (serving cell group) may correspond to one or more "candidate cells (candidate cell groups)".

In some embodiments, the first layer of the 5G is a physical layer, the second layer of the 5G includes an MAC, a radio link control (RLC), and a packet data convergence protocol (PDCP), and the third layer of the 5G is an RRC layer.

### Scenarios Supported by LTM

Rel-18 (R18) L1/L2 mobility includes both non-CA (PCell only) and CA scenarios (PCell and SCell). This includes the following cases.
a) The target PCell/target SCell(s) is(are) not a current serving cell (a CA scenario with PCell change).
b) The target PCell is the current SCell.
c) The target SCell is the current PCell.

L1L2-based mobility supports the following CA scenarios.
a) PCell change without SCell change.
b) PCell change with SCell change.
c) Support the NR-DC scenario in L1L2-based mobility, at least for the PSCell change without the MN involvement case, i.e., intra-SN.

For the CPA/CPC configured by a different node, the measurement configuration referenced by the CPA/CPC may be different. Therefore, it is required to first determine the measurement configuration corresponding to the execution condition of the CPA/CPC before performing the measurement evaluation. For the CPA/CPC initiated by the S-MN and the S-SN, the execution condition is configured by the S-MN and the S-SN. Therefore, the terminal may determine that the measurement configuration corresponding to the condition of the CPA/CPC is the measurement configuration corresponding to the current MCG and SCG of the terminal.

However, for the CPA/CPC initiated by the T-MN, the execution condition is determined by the T-MN and is sent to the terminal via the target PCell. The condition of CPA/CPC configured by the T-MN is determined based on the measurement configuration provided by the target PCell. Therefore, if the terminal needs to evaluate the execution condition of the CPA/CPC, the terminal needs to obtain the measurement configuration of the target PCell. When the CHO and the CPAC are jointly configured, the target PSCell corresponding to the CPAC is associated with the target PCell corresponding to the corresponding CHO. Since there are a plurality of candidate PCells, the measurement configurations of different target PCells are also different. Only after the terminal has accessed the target PCell, can the terminal know the measurement configuration corresponding to the target PCell, and thus the terminal can perform the CPAC. In cases where the parallel evaluation of the CHO and the CPAC is required, according to the existing communication protocol, the terminal cannot obtain the measurement configuration corresponding to the CPAC condition before executing the CHO, which means that the simultaneous execution of the CHO and the CPAC is not achievable.

The method provided in the embodiments of the present application specifies the manner in which the terminal obtains, when the conditional mobility configuration for the MCG/PCell and the conditional mobility configuration for the SCG/PSCell are jointly configured, the measurement configuration corresponding to the execution condition of the conditional mobility configuration for the SCG/PSCell. For example, for cases where the CHO for the MCG/PCell and the CPA/CPC for the SCG/PSCell are configured simultaneously, the method specifies the manner in which the terminal obtains the measurement configuration corresponding to the execution condition of the CPA/CPC. Since the mobility configuration of the SCG/PSCell is associated with the candidate MCG/PCell corresponding to the candidate SCG/PSCell, for the mobility operation initiated by the T-MN, the terminal can obtain the measurement configuration corresponding to the execution condition of the mobility configuration of the SCG/PSCell before handing over to the MCG/PCell corresponding to the T-MN. For example, without waiting for the terminal to perform the CHO, the terminal can obtain the measurement configuration corresponding to the execution condition of the CPA/CPC, enabling the terminal to simultaneously execute the CHO and the CPA/CPC. Under this method, the present application also proposes a storage method for the configuration, where different terminal measurement variables (first variables) for different T-MNs, as well as the conditional reconfiguration variable (second variable) of the mobility configuration of the SCG/PSCell are maintained. For the mobility configurations of the SCG/PSCell configured by different T-MNs, the mobility configuration of the SCG/PSCell and the corresponding measurement configuration are stored correspondingly by using different variables stored by the terminal. This achieves the indication of the correspondence between the execution condition of the mobility configuration of the SCG/PSCell and the corresponding measurement configuration. For example, the correspondence between the execution condition of the CPAC conditional reconfiguration and the corresponding measurement configuration is indicated.

The method provided in the embodiments of the present application also proposes a method for resolving the inability of the terminal to simultaneously execute the MCG/PCell mobility operation and the SCG/PSCell mobility operation (e.g., inability to simultaneously execute the CHO and the CPAC) through inter-network negotiation. Through the inter-network negotiation, the measurement identifier corresponding to the execution condition of the mobility operation of the SCG/PSCell can correspond to the current measurement configuration of the terminal, enabling the terminal to obtain the measurement configuration of the mobility operation of the SCG/PSCell without waiting for the mobility operation of the MCG/PCell to be performed. For example, the terminal can obtain the measurement configuration of the CPAC without waiting for the CHO to be performed, thereby enabling the terminal to perform the CHO and the CPA/CPC simultaneously.

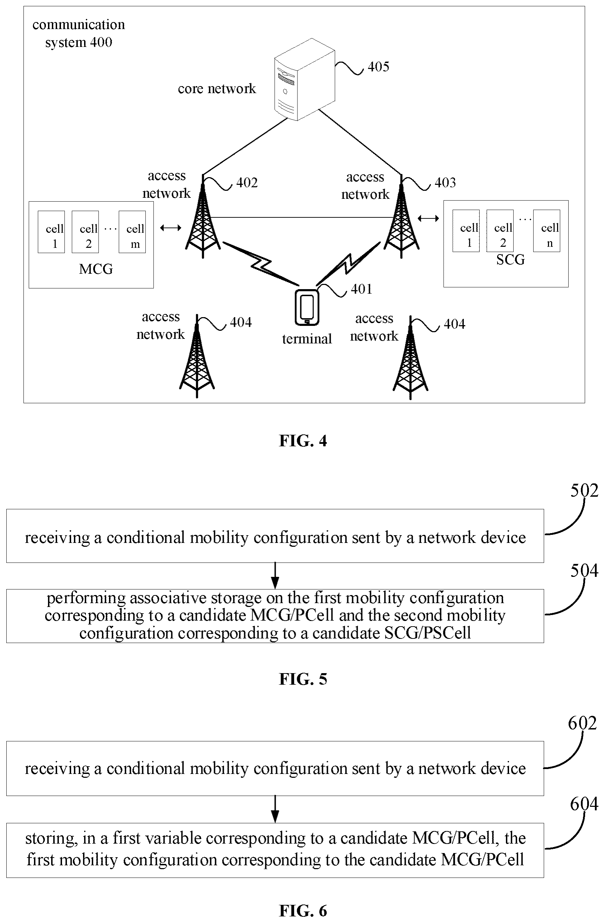

FIG. 4 is a schematic diagram of a communication system provided in an exemplary embodiment of the present application. The communication system 400 may include a terminal 401, an access network device 402, an access network device 403, an access network device 404, and a core network device 405.

The number of terminals 401 is typically more than one. One or more terminals 401 may be distributed in each cell managed by the access network device 402. The terminal 401 may include various handheld devices with wireless communication functions, vehicle-mounted devices, wearable devices, computing devices or other processing devices connected to a wireless modem, various forms of user equipment (UE), mobile stations (MS), etc. For convenience of description, the devices mentioned above are collectively referred to as terminals in the embodiments of the present application.

The access network devices 402, 403, and 404 are devices deployed in the access network to provide wireless communication functions for the terminal 401. The access network devices 402, 403, and 404 may include various forms of macro base stations, micro base stations, relay stations, and access points. In systems using different wireless access technologies, the names of devices with the access network device function may be different. For example, in a 5G NR system, the name of the device with the access network device function is referred to as gNodeB or gNB. For example, referring to FIGS. 1 and 2, the device with the access network device function in the dual connectivity scenario may also be referred to as an en-gNB (e.g., a 5G base station connected to an LTE core network) or an ng-eNB (e.g., an LTE base station connected to a 5G core network). As communication technologies evolve, the name "access network device" may change. For the convenience of description, in the embodiments of the present application, the devices that provide wireless communication functions to the terminal 401 are collectively referred to as access network devices. The access network devices 402, 403, and 404 may establish a connection with the terminal 401 via the air interface, thereby performing communications through this connection, including the interaction of signaling and data. The number of access network devices 402, 403, and 404 may be more than one. Two adjacent ones of access network devices 402, 403, and 404 may also communicate via wired or wireless manners (the connection with the access network device 404 is not shown in FIG. 4). The terminal 401 may perform handovers between different ones of access network devices 402, 403, and 404, i.e., establish connections with different ones of access network devices 402, 403, and 404.

As shown in FIG. 4, in some embodiments, the terminal establishes the dual connectivity with the access network device 402 and the access network device 403. In some embodiments, m cells from a plurality of cells provided by the access network device 402 form the MCG of the terminal 401 via carrier aggregation, and n cells from a plurality of cells provided by the access network device 403 form the SCG of the terminal 401 via carrier aggregation. The MCG of the terminal 401 includes a PCell (e.g., cell 1 in the MCG) and one or more SCells. The SCG of the terminal 401 (e.g., cell 1 in the SCG) includes a PSCell and one or more SCells. The access network device 402 may be referred to as the S-MN of the terminal. The access network device 403 may be referred to as the S-SN of the terminal. When the condition is evaluated to be met, the terminal 401 may execute the mobility operation, such as the CHO, the CPA, the CPC, the cell group/cell selective activation, etc. For the mobility operation executed by the terminal, it is required to provide the candidate MCG/PCell and/or the candidate SCG/PSCell to the terminal. The access network device that provides the candidate MCG/PCell to the terminal may be referred to as the T-MN of the terminal. The access network device that provides the candidate SCG/PSCell to the terminal may be referred to as the T-SN of the terminal, such as the access network device 404 in FIG. 4.

The functions of the core network device 405 are mainly to provide user connections, manage users, and complete bearers for services, serving as a bearer network to provide interfaces to external networks. The access network device 402, the access network 403, the access network device 404, and the core network device 405 may collectively be referred to as network devices. The core network device 405 communicates with the access network device 402, the access network device 403, and the access network device 404 via a certain air interface technology (the connection with the access network device 404 is not shown in FIG. 4). Through the access network device 402, the access network device 403, and the access network device 404, a communication relationship may be established between the terminal 401 and the core network device 405.

It should be noted that the number of the communication devices shown in FIG. 4 is provided merely as an example. The number of the communication devices may also be greater, and the connection relationships may also be modified according to actual circumstances. The example in FIG. 4 does not constitute a limitation on the communication system provided in the embodiments of the present application.

The "5G NR system" in the embodiments of the present application may also be referred to as a 5G system or an NR system, but those skilled in the art can understand its meaning. The technical solutions described in the embodiments of the present application may be applied to the 5G NR system, and may also be applied to subsequent evolution systems of the 5G NR system.

FIG. 5 shows a flowchart of a conditional mobility configuration method provided in an embodiment of the present application. The method may be applied to a terminal. The method includes the following steps 502 to 504.

At step 502, a conditional mobility configuration sent by a network device is received.

The conditional mobility configuration includes a first mobility configuration and a second mobility configuration. The first mobility configuration is a configuration for MCG/PCell mobility. The second mobility configuration is a configuration for SCG/PSCell mobility.

When the terminal determines that the execution condition of the first mobility configuration is met, for example, the terminal determines, through evaluating, that the execution condition of the first mobility configuration is met, the terminal executes the mobility operation of the first mobility configuration. Optionally, the evaluating includes an evaluation based on a measurement result.

When the terminal determines that the execution condition of the second mobility configuration is met, for example, the terminal determines, through evaluating, that the execution condition of the second mobility configuration is met, the terminal executes the mobility operation of the second mobility configuration. Optionally, the evaluating includes an evaluation based on a measurement result.

In some embodiments, the terminal receives the first mobility configuration and the second mobility configuration simultaneously sent by the network device. For example, the first mobility configuration and the second mobility configuration are carried in the same message.

In some embodiments, the terminal receives the first mobility configuration and the second mobility configuration sent by the network device at different timepoints. For example, the first mobility configuration and the second mobility configuration are carried in different messages. Optionally, the terminal first receives the first mobility configuration, and then receives the second mobility configuration. Alternatively, the terminal first receives the second mobility configuration, and then receives the first mobility configuration.

In some embodiments, the network device is the S-MN of the terminal. In some embodiments, the network device is the S-SN of the terminal. In some embodiments, the second mobility configuration is initiated and configured by the T-MN.

For example, the second mobility configuration may be initiated by the T-MN, and is forwarded to the terminal by the S-MN.

For example, a portion of the content in the second mobility configuration may be from the T-SN.

In some embodiments, a portion of the configuration information in the first mobility configuration is used for the terminal to execute a relevant process of the second mobility configuration corresponding to a candidate SCG/PSCell associated with a candidate MCG/PCell. That is, when the terminal evaluates whether the execution condition of the second mobility configuration is met, the terminal needs to use the first mobility configuration corresponding to a candidate MCG/PCell associated with a candidate SCG/PSCell corresponding to the second mobility configuration.

Optionally, the first mobility configuration includes at least one of the following:
· a configuration of a CHO;
· a configuration of MCG/PCell selective activation; and
· a configuration corresponding to L1/L2-triggered MCG/PCell mobility.

In some embodiments, when the terminal determines that the execution condition of the CHO is met, the terminal may perform the MCG/PCell handover. During the execution process of the CHO, at least the handover of the PCell is involved. If the handover of the SCell in the MCG is not involved, or the SCell is not configured, then the handover of the PCell is performed. If the handover of the SCell in the MCG is involved, then the handover of the MCG is performed.

In some embodiments, through the configuration of the MCG/PCell selective activation, the network side may provide the terminal with the MCG/PCell to be activated. The terminal, when determining that the execution condition (activation condition) of the MCG/PCell selective activation is met, may activate or deactivate the MCG/PCell to be activated.

In some embodiments, the L1/L2-triggered MCG/PCell mobility (LTM-MCG/PCell) is used for controlling the terminal to change its serving MCG/PCell among a plurality of candidate MCGs/PCells corresponding to the serving MCG/PCell of the terminal.

Optionally, in the case where the first mobility configuration is used for configuring the CHO and the MCG/PCell selective activation, the first mobility configuration includes at least one of the following information:
· a configuration identifier;
· an execution condition;
· a configuration corresponding to the candidate MCG/PCell, and/or a configuration corresponding to the candidate SCG/PSCell; and
· indication information.

In some embodiments, the configuration identifier is used for identifying the first mobility configuration. The execution condition is used for the terminal to execute the mobility operation of the first mobility configuration when the terminal determines that the execution condition is met. The configuration corresponding to the candidate MCG/PCell includes the configuration corresponding to the MCG/PCell that the terminal may access after performing the mobility operation. Optionally, the configuration corresponding to the candidate MCG/PCell includes information for the terminal to determine whether the execution condition is met, for example, the configuration corresponding to the candidate MCG/PCell includes a measurement configuration corresponding to the execution condition, or information for determining the measurement configuration corresponding to the execution condition. For example, the configuration corresponding to the candidate MCG/PCell includes at least one of the following: a measurement configuration, a bearer configuration, a cell configuration, and a synchronization reconfiguration that are corresponding to the candidate MCG/PCell. The configuration corresponding to the candidate SCG/PSCell is a configuration of the SCG/PSCell associated with the candidate MCG/PCell in the dual connectivity scenario. The configuration corresponding to the candidate SCG/PSCell includes a configuration corresponding to the SCG/PSCell that the terminal may access after performing the mobility operation. For example, the configuration corresponding to the candidate SCG/PSCell includes at least one of the following: a measurement configuration, a bearer configuration, a cell configuration, and a synchronization reconfiguration that are corresponding to the candidate SCG/PSCell. The indication information is used for indicating the purpose of the configuration indicated by the above information, such as indicating that the purpose is one or more of: the CHO and the MCG/PCell selective activation.

In some embodiments, the first mobility configuration includes a configuration corresponding to the candidate MCG/PCell, and the second mobility configuration is carried in the configuration corresponding to the candidate MCG/PCell.

Optionally, the second mobility configuration includes at least one of the following:
· a configuration of a CPA;
· a configuration of a CPC;
· a configuration of SCG/PSCell selective activation; and
· a configuration corresponding to L1/L2-triggered SCG/PSCell mobility.

In some embodiments, the terminal performs the SCG/PSCell addition when determining that the execution condition of the CPA is met. During the execution process of the CPA, at least the addition of the PSCell is involved, and if the SCell in the SCG is not involved, or the SCell is not configured, then the addition of the PSCell is performed; or if the addition of the SCell in the SCG is involved, then the addition of the SCG is performed.

In some embodiments, the terminal performs the SCG/PSCell change when determining that the execution condition of the CPC is met. During the execution process of the CPC, at least the change of the PSCell is involved, and if the SCell in the SCG is not involved, or the SCell is not configured, then the change of the PSCell is performed; or if the change of the SCell in the SCG is involved, then the change of the SCG is performed.

In some embodiments, through the configuration of the SCG/PSCell selective activation, the network side may provide the terminal with the SCG/PSCell to be activated. The terminal, when determining that the execution condition (activation condition) of the SCG/PSCell selective activation is met, may activate or deactivate the SCG/PSCell to be activated.

In some embodiments, the L1/L2-triggered SCG/PSCell mobility (LTM-SCG/PSCell) is used for controlling the terminal to change its serving SCG/PSCell among a plurality of candidate SCGs/PSCells corresponding to the serving SCG/PSCell of the terminal.

Optionally, in the case where the second mobility configuration is used for configuring the CPA/CPC, and the SCG/PSCell selective activation, the second mobility configuration includes at least one of the following information:
· a configuration identifier;
· an execution condition;
· a configuration corresponding to the candidate MCG/PCell, and/or a configuration corresponding to the candidate SCG/PSCell; and
· indication information.

In some embodiments, the configuration identifier is used for identifying the second mobility configuration. The execution condition is used for the terminal to execute the mobility operation of the second mobility configuration when the terminal determines that the execution condition is met. The configuration corresponding to the candidate MCG/PCell includes the configuration corresponding to the MCG/PCell that the terminal may access after performing the mobility operation. Optionally, the configuration corresponding to the candidate MCG/PCell includes information for the terminal to determine whether the execution condition is met, for example, the configuration corresponding to the candidate MCG/PCell includes a measurement configuration corresponding to the execution condition, or information for determining the measurement configuration corresponding to the execution condition. For example, the configuration corresponding to the candidate MCG/PCell includes at least one of the following: a measurement configuration, a bearer configuration, a cell configuration, and a synchronization reconfiguration that are corresponding to the candidate MCG/PCell. The configuration corresponding to the candidate SCG/PSCell is a configuration of the SCG/PSCell associated with the candidate MCG/PCell in the dual connectivity scenario. The configuration corresponding to the candidate SCG/PSCell includes a configuration corresponding to the SCG/PSCell that the terminal may access after performing the mobility operation. For example, the configuration corresponding to the candidate SCG/PSCell includes at least one of the following: a measurement configuration, a bearer configuration, a cell configuration, and a synchronization reconfiguration that are corresponding to the candidate SCG/PSCell. The indication information is used for indicating the purpose of the configuration indicated by the above information, such as indicating that the purpose is one or more of: the CPA, the CPC, and the SCG/PSCell selective activation.

For example, the terminal receives the conditional mobility configuration, and the mobility configuration information includes the configuration of the CHO and the associated one or more CPA/CPC configurations. In this example, the configuration of the CHO includes the execution condition of the CHO, and the configuration corresponding to the candidate MCG, where the configuration corresponding to this MCG includes one or more CPC/CPA configurations, and the corresponding configuration information of the subsequent MCG. The subsequent MCG is a candidate MCG that the terminal may switch to when the terminal switches again later after switching to the candidate MCG.

At step 504, associative storage is performed on the first mobility configuration corresponding to the candidate MCG/PCell and the second mobility configuration corresponding to the candidate SCG/PSCell.

### Storage of Mobility Configuration

The first mobility configuration and the second mobility configuration received by the terminal may be considered as a joint mobility configuration, such as a joint configuration of the CHO and the CPAC. The terminal stores the above mobility configuration after receiving it.

The candidate MCG/PCell is indicated by the first mobility configuration. Optionally, the candidate MCG/PCell is an accessible MCG/PCell after the terminal evaluates the execution condition of the first mobility configuration. The candidate MCG includes one or more MCGs. The candidate PCell includes one or more PCells.

The candidate SCG/PSCell is indicated by the second mobility configuration. Optionally, the candidate SCG/PSCell is an accessible SCG/PSCell after the terminal evaluates the execution condition of the second mobility configuration. The candidate SCG includes one or more SCGs. The candidate PSCell includes one or more PSCells.

In some embodiments, the methods provided in the embodiments of the present application are applied to the dual connectivity scenario. In the dual connectivity scenario, the candidate MCG/PCell is associated with the candidate SCG/PSCell. Each candidate MCG/PCell may correspond to one or more candidate SCGs/PSCells.

In some embodiments, the terminal, when storing the first mobility configuration and the second mobility configuration, stores, in a variable corresponding to the candidate MCG/PCell, the first mobility configuration corresponding to the candidate MCG/PCell, and/or the second mobility configuration corresponding to all or a portion (one or more) of the candidate SCGs/PSCells associated with the candidate MCG/PCell. During the storage process, the terminal may store the first mobility configuration and the second mobility configuration jointly in the variable corresponding to the candidate MCG/PCell, or may store the first mobility configuration and the second mobility configuration separately.

For example, the first mobility configuration is a candidate target configuration (a configuration corresponding to the candidate MCG/PCell) corresponding to the candidate MCG/PCell, and includes a corresponding configuration of the candidate MCG/PCell, such as a measurement configuration.

For example, the second mobility configuration is a conditional trigger-based mobility configuration corresponding to the candidate SCG/PSCell, and includes one or more of the following: a configuration identifier, an execution condition, and a candidate target configuration (a configuration corresponding to the candidate SCG/PSCell).

In some embodiments, in storing the second mobility configuration, the terminal stores, in a variable corresponding to a candidate MCG/PCell, the second mobility configuration corresponding to a candidate SCG/PSCell associated with the candidate MCG/PCell.

In some embodiments, in storing the first mobility configuration, the terminal stores, in a variable corresponding to a source MCG/PCell, a third mobility configuration corresponding to all or a portion (one or more) of the candidate MCGs/PCells.

For example, the third mobility configuration is a conditional trigger-based mobility configuration corresponding to the candidate MCG/PCell, and includes one or more of the following: a configuration identifier, an execution condition, and a candidate target configuration. Optionally, the candidate target configuration includes a measurement configuration configured by the source MCG/PCell of the terminal. In some embodiments, the third mobility configuration may be considered to include the first mobility configuration described above. The third mobility configuration may be considered to be a complete mobility configuration. Optionally, the third mobility configuration is configured by the S-MN, and is sent to the terminal.

### Storage of First Mobility Configuration

In some embodiments, each candidate MCG/PCell corresponds to a separate first variable. The terminal stores the first mobility configuration corresponding to a candidate MCG/PCell in a first variable corresponding to the candidate MCG/PCell. Optionally, the first variable may be referred to as a terminal (UE) variable, or may be referred to as a Var (variable) variable.

### For Case of Storing Complete Measurement Configuration

In some embodiments, when storing the first mobility configuration, the terminal stores, in the first variable corresponding to the candidate MCG/PCell, the measurement configuration (complete measurement configuration) corresponding to the candidate MCG/PCell. In some embodiments, the measurement configuration corresponding to the candidate MCG/PCell is determined based on the first mobility configuration. The measurement configuration corresponds to the execution condition of the first mobility configuration, and is used for the terminal to perform measurement through the measurement configuration to evaluate whether the execution condition is met. Optionally, the first variable storing the measurement configuration is a measurement configuration variable (VarMeasConfig).

In some embodiments, the first mobility configuration includes a configuration corresponding to the candidate MCG/PCell, and the configuration corresponding to the candidate MCG/PCell includes a measurement configuration corresponding to the candidate MCG/PCell. That is, the terminal can directly obtain the measurement configuration corresponding to the candidate MCG/PCell through the first mobility configuration.

In some embodiments, the first mobility configuration includes a configuration corresponding to the candidate MCG/PCell, and the configuration corresponding to the candidate MCG/PCell includes measurement configuration information (incremental configuration) corresponding to the candidate MCG/PCell. The terminal is capable of generating the measurement configuration corresponding to the candidate MCG/PCell based on the measurement configuration of the serving MCG/PCell, and the measurement configuration information corresponding to the candidate MCG/PCell, and later storing the measurement configuration (complete measurement configuration) corresponding to the candidate MCG/PCell.

### For Case of Storing Incremental Configuration

In some embodiments, the first mobility configuration includes a configuration corresponding to the candidate MCG/PCell, and the configuration corresponding to the candidate MCG/PCell includes measurement configuration information (incremental configuration) corresponding to the candidate MCG/PCell. When storing the first mobility configuration, the terminal stores, in the first variable corresponding to the candidate MCG/PCell, the measurement configuration information corresponding to the candidate MCG/PCell. In some embodiments, the measurement configuration information corresponding to the candidate MCG/PCell is used for generating the measurement configuration corresponding to the candidate MCG/PCell. By storing only the incremental configuration, optimization of the storage space of the terminal can be achieved.

Optionally, the above-described first variable includes one or more of the following information:
· a configuration list;
· a measurement amount configuration;
· a measurement startup threshold (s-MeasureConfig); and
· a measurement gap configuration.

Optionally, the above first variable may include a measurement configuration, such as one or more of the following: a measurement object configuration, a measurement identifier configuration, and a report configuration.

Optionally, the above first variable may also include other configurations other than the measurement configuration, such as the bearer configuration.

Optionally, the configuration list includes one or more of the following:
· a measurement identifier list (measIdList);
· a measurement object list (measObjectList); and
· a report configuration list (reportConfigList).

Optionally, the measurement amount configuration is used for indicating the type of measurement performed by the terminal. The measurement startup threshold is used for indicating the threshold value that triggers the terminal to perform measurement. The measurement gap configuration is used for indicating the time domain resource when the terminal performs measurement.

Optionally, the above measurement configuration information includes one or more of the following information:
· a configuration add or modify list;
· a configuration remove list;
· a measurement amount configuration;
· a measurement startup threshold; and
· a measurement gap configuration.

For example, the configuration add or modify list is used for indicating a cumulative or existing measurement configuration.

Optionally, the configuration add or modify list (...AddModList) includes one or more of the following:
· a measurement object to add or modify list (measObjectToAddModList);
· a report configuration to add or modify list (reportConfigToAddModList); and
· a measurement identifier to add or modify list (measIdToAddModList).

Optionally, the configuration removal list (...RemoveList) includes one or more of the following:
· a measurement object to remove list (measObjectToRemoveList);
· a report configuration to remove list (reportConfigToRemoveList); and
· a measurement identifier to remove list (measIdToRemoveList).

For example, the specific steps for the terminal to generate, based on the measurement configuration of the current serving MCG and the incremental configuration (incremental measurement configuration) included in the configuration corresponding to the candidate MCG, the measurement configuration corresponding to this candidate MCG and store the measurement configuration corresponding to the candidate MCG may be that: the terminal obtains the configuration corresponding to the candidate MCG by performing adding or modifying on the corresponding configuration of the current serving MCG based on the configuration add or modify list included in the incremental configuration of the candidate MCG; the terminal obtains the configuration corresponding to this candidate MCG by removing the corresponding configuration of the current serving MCG based on the configuration removal list included in the incremental configuration of the candidate MCG; the terminal obtains the configuration corresponding to this candidate MCG by updating the corresponding configuration of the current serving MCG based on the measurement amount configuration, the measurement startup threshold, and the measurement gap configuration in the incremental configuration (if any), and performs the storage through the corresponding first variable of this candidate MCG.

In some embodiments, the first variable may be VarMeasConfig.

### Storage of Second Mobility Configuration

In some embodiments, each candidate MCG/PCell corresponds to a separate second variable. The terminal stores the second mobility configuration corresponding to a candidate SCG/PSCell associated with a candidate MCG/PCell in a second variable corresponding to the candidate MCG/PCell. Optionally, the second variable may be referred to as a terminal (UE) variable, or may be referred to as a Var variable. The second variable is used for storing the second mobility configuration corresponding to one or more candidate SCGs/PSCells corresponding to the candidate MCG/PCell to which the second variable corresponds.

In some embodiments, the second variable is a conditional reconfiguration variable (VarConditionalReconfig).

In some embodiments, the second variable includes a field used for indicating the mobility configuration, such as a conditional reconfiguration list (CondReconfigList), to indicate that the second variable is used for storing the mobility configuration. Optionally, the field used for indicating the mobility configuration is indicated by a conditional reconfiguration to add or modify list (CondReconfigToAddModList).

In some embodiments, for a joint mobility configuration, if the configuration corresponding to the candidate MCG included in the mobility configuration of the candidate MCG includes the mobility configuration of one or more candidate SCGs associated with the candidate MCG, then, in response to the terminal receiving the joint mobility configuration, the terminal reads the configuration corresponding to the candidate MCG in the mobility configuration of the candidate MCG, and stores, by using the second variable corresponding to this candidate MCG, the mobility configuration of the one or more candidate SCGs associated with the candidate MCG.

For example, the joint mobility configuration is CHO+CPC, with a second variable corresponding to each candidate MCG of the CHO, and the terminal stores, by using the second variable, the CPC configuration of one or more (all) SCGs corresponding to the candidate MCG configured with the CHO.

In some embodiments, the terminal stores the first mobility configuration by using only the first variable. In some embodiments, the terminal stores the second mobility configuration by using only the second variable. In some embodiments, the terminal stores the first mobility configuration by using the first variable, and stores the second mobility configuration by using the second variable.

For example, the first mobility configuration includes a CHO configuration of the candidate PCell 1, and the second mobility configuration includes a CPAC configuration of the candidate PSCell 1, the candidate PSCell 2, and the candidate PSCell 3. The candidate PCell 1 is associated with the candidate PSCell 1, the candidate PSCell 2, and the candidate PSCell 3. In storing the first mobility configuration and the second mobility configuration, the terminal stores a CHO configuration of the candidate PSCell 1 in a first variable corresponding to the candidate PSCell 1, and stores the CPAC configuration of the candidate PSCell 1, the candidate PSCell 2, and the candidate PSCell 3 in a second variable corresponding to the PSCell 1.

### Use of Mobility Configurations

In some embodiments, the terminal, in the process of evaluating the execution condition of the third mobility configuration, may directly use the measurement configuration of the source MCG/PCell configuration for the evaluating, thereby determining whether to execute the mobility operation of the third mobility configuration, such as determining whether to execute the selective activation of the CHO and the MCG/PCell.

In some embodiments, the terminal, in the process of evaluating the execution condition of the second mobility configuration, may directly use the corresponding measurement configuration of the first mobility configuration corresponding to the candidate MCG/PCell for the evaluating, thereby determining whether to execute the mobility operation of the second mobility configuration, such as determining whether to execute the selective activation of the CPA/CPC and the SCG/PSCell.

In some embodiments, the second mobility configuration is used for the conditional trigger-based SCG/PSCell mobility, for example, the selective activation of the CPA, the CPC, and the SCG. In some embodiments, the terminal, in the process of evaluating the execution condition of the SCG/PSCell mobility, performs measurement based on the measurement configuration stored in the first variable corresponding to the candidate MCG/PCell associated with the mobility configuration of the candidate SCG/PSCell, thereby evaluating whether an event corresponding to the execution condition is met.

For example, in performing the CPAC event evaluation, the terminal performs the measurement based on the measurement configuration stored in the first variable corresponding to the candidate MCG associated with this CPAC, thereby evaluating whether the CPAC event is met.

### For Case of Terminal Storing Complete Measurement Configuration

In some embodiments, the terminal, in the process of evaluating the execution condition of the second mobility configuration, performs the measurement based on the measurement configuration stored in the first variable corresponding to the candidate MCG/PCell associated with the second mobility configuration.

For example, the terminal may perform the measurement based only on the measurement configuration stored in the first variable corresponding to the candidate MCG to evaluate whether the event corresponding to the execution condition corresponding to the mobility configuration of the candidate SCG associated with this candidate MCG is met.

### For Case of Terminal Storing Incremental Configuration

In some embodiments, the terminal, in the process of evaluating the execution condition of the second mobility configuration, performs the measurement based on the measurement configuration of the serving MCG/PCell and the measurement configuration information corresponding to the candidate MCG/PCell. In some embodiments, the measurement configuration of the serving MCG/PCell and the measurement configuration information corresponding to the candidate MCG/PCell are used for the terminal to generate the measurement configuration corresponding to the candidate MCG/PCell.

For example, the terminal may obtain the measurement configuration corresponding to the candidate MCG based on the measurement configuration stored in the first variable corresponding to this candidate MCG and the measurement configuration corresponding to the current serving MCG, so as to perform the measurement for evaluating whether the event corresponding to the execution condition corresponding to the mobility configuration of the candidate SCG associated with this candidate MCG is met.

### Processing of Stored Mobility Configuration After Performing Mobility Operation

Optionally, the first mobility configuration includes a configuration of the CHO, and the second mobility configuration includes a configuration of the CPAC. The following is for the case of the joint configuration of the CHO and the CPAC.

### For Case of Terminal Executing CHO and CPAC

In some embodiments, after the terminal executes the CHO and the CPAC, the terminal clears all second variables. For example, the terminal deletes all entries in all the Var variables (i.e., the second variables) storing the conditional reconfiguration configurations, that is, the terminal clears the second variable corresponding to each candidate MCG/PCell, and the second variable corresponding to the serving MCG/PCell.

In some embodiments, after the terminal performs the CHO and the CPAC, the terminal updates a first variable corresponding to a candidate MCG/PCell that the terminal determines to access to a first variable corresponding to the serving MCG/PCell of the terminal. Optionally, in the case where the first mobility configuration includes a complete measurement configuration, the terminal updates a first variable corresponding to an accessed candidate MCG/PCell to the first variable corresponding to the serving MCG/PCell. In the case where the first mobility configuration includes an incremental configuration, the terminal, based on the incremental configuration in the first variable corresponding to the accessed candidate MCG/PCell, and based on the measurement configuration of the previous serving MCG/PCell, may obtain the measurement configuration corresponding to the accessed candidate MCG/PCell, and store the measurement configuration corresponding to the accessed candidate MCG/PCell in the first variable corresponding to the accessed candidate MCG/PCell. The terminal may later update the measurement configuration corresponding to the accessed candidate MCG/PCell to the first variable of the newly accessed serving MCG of the terminal.

In some embodiments, after the terminal performs the CHO and the CPAC, the terminal clears a first variable corresponding to a candidate MCG/PCell other than the candidate MCG/PCell that the terminal determines to access.

### For First Case of Terminal Only Executing CHO but not Executing CPAC

In this case, the terminal may perform the same steps as described above in "For Case of Terminal Executing CHO and CPAC". That is, after the CHO, the terminal performs the steps described in the above case correspondingly.

### For Second Case of Terminal Only Executing CHO but not Executing CPAC

In some embodiments, in the case where the terminal executes the CHO but does not execute the CPAC, the terminal clears a second variable corresponding to a candidate MCG/PCell other than the candidate MCG/PCell that the terminal determines to access. For example, the terminal deletes all entries in all the Var variables (i.e., the second variables) storing the conditional reconfiguration configurations and corresponding to other candidate MCGs other than the candidate MCG that the terminal determines to access, that is, the terminal clears the second variables corresponding to other candidate MCGs, and the second variable corresponding to the serving MCG.

In some embodiments, in the case where the terminal executes the CHO but does not execute the CPAC, the terminal updates a second variable corresponding to the candidate MCG/PCell that the terminal determines to access to a second variable corresponding to the serving MCG/PCell of the terminal.

In summary, in the methods provided in this embodiment, when the first mobility configuration and the second mobility configuration are jointly configured, through the associative storage performed by the terminal on the first mobility configuration of the candidate MCG/PCell and the second mobility configuration of the candidate SCG/PSCell corresponding to the candidate MCG/PCell, the terminal can be enabled to determine the second mobility configuration corresponding to a different candidate SCG/PSCell without executing the mobility operation of the first mobility configuration. For example, the terminal can determine the CPAC configuration of a different candidate SCG/PSCell without executing the CHO. This can enable the terminal to simultaneously execute the mobility operation of the first mobility configuration and the mobility operation of the second mobility configuration.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

### Terminal Obtaining and Storing Jointly Configured Conditional First Mobility Configuration and Second Mobility Configuration

FIG. 6 shows a flowchart of a conditional mobility configuration method provided in an embodiment of the present application. The method may be applied in a terminal. In some embodiments, the method may be used in the terminal in the system shown in FIG. 4. The method includes the following steps 602 to 604.

At step 602, a conditional mobility configuration sent by a network device is received.

The conditional mobility configuration includes a first mobility configuration and a second mobility configuration. The first mobility configuration is a configuration for MCG/PCell mobility. The second mobility configuration is a configuration for SCG/PSCell mobility. In some embodiments, the terminal receives the first mobility configuration and the second mobility configuration simultaneously sent by the network device. In some embodiments, the terminal receives the first mobility configuration and the second mobility configuration sent by the network device at different timepoints.

For the detailed introduction to the mobility configuration, please refer to the relevant content in the embodiment of FIG. 5, which will not be repeated in the embodiments of the present application.

At step 604, the first mobility configuration corresponding to a candidate MCG/PCell is stored in a first variable corresponding to the candidate MCG/PCell.

In some embodiments, each candidate MCG/PCell corresponds to a separate first variable. The terminal stores the first mobility configuration corresponding to a candidate MCG/PCell in a first variable corresponding to the candidate MCG/PCell. Optionally, the first variable may be referred to as a terminal (UE) variable, or may be referred to as a Var (variable) variable.

In some embodiments, when storing the first mobility configuration, the terminal stores, in the first variable corresponding to the candidate MCG/PCell, the measurement configuration (complete measurement configuration) corresponding to the candidate MCG/PCell. In some embodiments, the measurement configuration corresponding to the candidate MCG/PCell is determined based on the first mobility configuration.

In some embodiments, the first mobility configuration includes a configuration corresponding to the candidate MCG/PCell, and the configuration corresponding to the candidate MCG/PCell includes measurement configuration information (incremental configuration) corresponding to the candidate MCG/PCell. When storing the first mobility configuration, the terminal stores, in the first variable corresponding to the candidate MCG/PCell, the measurement configuration information corresponding to the candidate MCG/PCell. In some embodiments, the measurement configuration information corresponding to the candidate MCG/PCell is used for generating the measurement configuration corresponding to the candidate MCG/PCell.

In some embodiments, a portion of the configuration information in the first mobility configuration is used for the terminal to execute a relevant process of the second mobility configuration corresponding to the candidate SCG/PSCell associated with the candidate MCG/PCell. For example, the first mobility configuration corresponding to the candidate MCG/PCell includes information for determining the measurement configuration corresponding to the candidate MCG/PCell.

For the detailed introduction to the mobility configuration, please refer to the relevant content in the embodiment of FIG. 5, which will not be repeated in the embodiments of the present application.

In summary, in the methods provided in this embodiment, when the first mobility configuration and the second mobility configuration are jointly configured, the terminal stores, in the corresponding first variable, the first mobility configuration of the candidate MCG/PCell, where a portion of the configuration information in the first mobility configuration is used for the terminal to execute a relevant process of the second mobility configuration corresponding to the candidate SCG/PSCell associated with the candidate MCG/PCell. This can enable the terminal to determine the information required for the evaluation using the second mobility configuration corresponding to a different candidate SCG/PSCell without executing the mobility operation of the first mobility configuration. For example, the terminal can determine the CPAC configuration of a different candidate SCG/PSCell without executing the CHO. This can enable the terminal to simultaneously execute the mobility operation of the first mobility configuration and the mobility operation of the second mobility configuration.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

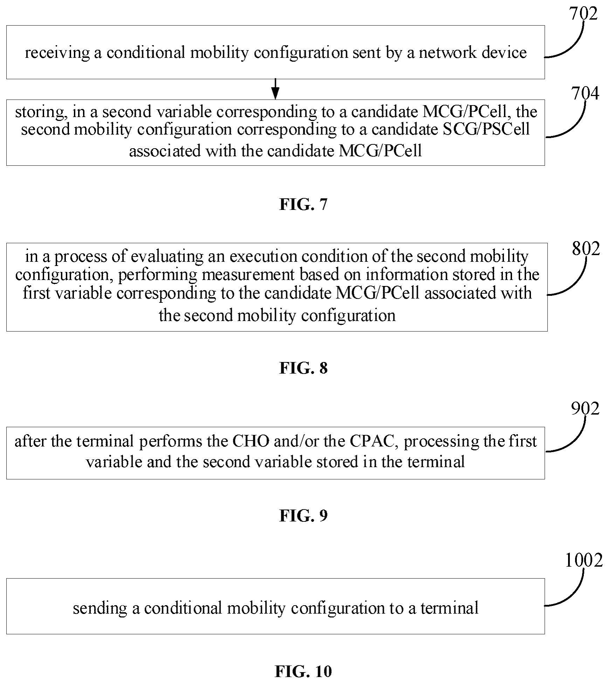

FIG. 7 shows a flowchart of a conditional mobility configuration method provided in an embodiment of the present application. The method may be applied in a terminal. In some embodiments, the method may be used in the terminal in the system shown in FIG. 4. The method includes the following steps 702 to 704.

At step 702, a conditional mobility configuration sent by a network device is received.

The conditional mobility configuration includes a first mobility configuration and a second mobility configuration. The first mobility configuration is a configuration for MCG/PCell mobility. The second mobility configuration is a configuration for SCG/PSCell mobility. In some embodiments, the terminal receives the first mobility configuration and the second mobility configuration simultaneously sent by the network device. In some embodiments, the terminal receives the first mobility configuration and the second mobility configuration sent by the network device at different timepoints.

For the detailed introduction to the mobility configuration, please refer to the relevant content in the embodiment of FIG. 5, which will not be repeated in the embodiments of the present application.

At step 704, the second mobility configuration corresponding to a candidate SCG/PSCell associated with a candidate MCG/PCell is stored in a second variable corresponding to the candidate MCG/PCell.

In some embodiments, each candidate MCG/PCell corresponds to a separate second variable. The terminal stores the second mobility configuration corresponding to a candidate SCG/PSCell associated with a candidate MCG/PCell in a second variable corresponding to the candidate MCG/PCell. Optionally, the second variable may be referred to as a terminal (UE) variable, or may be referred to as a Var variable.

In some embodiments, the terminal, based on the second variables corresponding to different candidate MCGs/PCells, is capable of determining the second mobility configurations corresponding to different candidate MCGs/PCells, and then, based on the measurement configurations corresponding to different candidate MCGs/PCells, the terminal can determine a correspondence between the measurement configuration and the second mobility configuration corresponding to the same candidate MCG/PCell. In some embodiments, a portion of the configuration information in the first mobility configuration is used for the terminal to execute a relevant process of the second mobility configuration corresponding to the candidate SCG/PSCell associated with the candidate MCG/PCell. For example, the first mobility configuration corresponding to the candidate MCG/PCell includes information for determining a measurement configuration corresponding to the candidate MCG/PCell.

For the detailed introduction to the storage of the mobility configuration, please refer to the relevant content in the embodiment of FIG. 5, which will not be repeated in the embodiments of the present application.

In summary, in the methods provided in this embodiment, when the first mobility configuration and the second mobility configuration are jointly configured, the terminal stores, in the corresponding second variable, the second mobility configuration of the candidate SCG/PSCell corresponding to candidate MCG/PCell, which can achieve the establishment of the association relationship between the second mobility configuration and the measurement configuration corresponding to the candidate MCG/PCell. This can enable the terminal to determine the measurement configurations corresponding to the second mobility configurations corresponding to different candidate SCGs/PSCells without executing the mobility operation of the first mobility configuration. For example, the terminal can determine the CPAC configurations of different candidate SCGs/PSCells without executing the CHO. This can enable the terminal to simultaneously execute the mobility operation of the first mobility configuration and the mobility operation of the second mobility configuration.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

### Terminal Performing Measurement by Using Jointly Configured Conditional First Mobility Configuration and Second Mobility Configuration

FIG. 8 shows a flowchart of a conditional mobility configuration method provided in an embodiment of the present application. The method may be applied in a terminal. In some embodiments, the method may be used in the terminal in the system shown in FIG. 4. The method includes the following step 802.

At step 802, in a process of evaluating an execution condition of the second mobility configuration, measurement is performed based on information stored in the first variable corresponding to the candidate MCG/PCell associated with the second mobility configuration.

The terminal stores the first mobility configuration and the second mobility configuration that are jointly configured.

In some embodiments, the terminal stores, in the first variable corresponding to the candidate MCG/PCell, the first mobility configuration corresponding to the candidate MCG/PCell. Optionally, the terminal stores the measurement configuration (complete measurement configuration) corresponding to the candidate MCG/PCell or the measurement configuration information (incremental configuration) corresponding to the candidate MCG/PCell. The measurement configuration information corresponding to the candidate MCG/PCell is used for generating the measurement configuration corresponding to the candidate MCG/PCell.

In some embodiments, the terminal stores, in the second variable corresponding to the candidate MCG/PCell, the second mobility configuration corresponding to the candidate SCG/PSCell associated with the candidate MCG/PCell.

In some embodiments, the terminal, in the process of evaluating the execution condition of the second mobility configuration, performs the measurement based on the measurement configuration stored in the first variable corresponding to the candidate MCG/PCell associated with the second mobility configuration.

In some embodiments, the terminal, in the process of evaluating the execution condition of the second mobility configuration, performs the measurement based on the measurement configuration of the serving MCG/PCell and the measurement configuration information corresponding to the candidate MCG/PCell. In some embodiments, the measurement configuration of the serving MCG/PCell and the measurement configuration information corresponding to the candidate MCG/PCell are used for the terminal to generate the measurement configuration corresponding to the candidate MCG/PCell.

In summary, in the methods provided in this embodiment, when the first mobility configuration and the second mobility configuration are jointly configured, the terminal, in the process of evaluating the execution condition of the second mobility configuration, can perform relevant measurement based on the information in the first variable corresponding to the candidate MCG/PCell, which can enable the terminal to determine the CPAC configurations of different candidate SCGs/PSCells without executing the CHO. This can enable the terminal to simultaneously execute the mobility operation of the first mobility configuration and the mobility operation of the second mobility configuration.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

For Processing of Stored Mobility Configuration After Executing Mobility Operation by Using Jointly Configured Conditional First Mobility Configuration and Second Mobility Configuration

FIG. 9 shows a flowchart of a conditional mobility configuration method provided in an embodiment of the present application. The method may be applied in a terminal. In some embodiments, the method may be used in the terminal in the system shown in FIG. 4. The method includes the following step 902.

At step 902, after the terminal performs the CHO and/or the CPAC, the first variable and the second variable stored in the terminal are processed.

The terminal stores the first mobility configuration and the second mobility configuration that are jointly configured.

In some embodiments, the terminal stores, in the first variable corresponding to the candidate MCG/PCell, the first mobility configuration corresponding to the candidate MCG/PCell. Optionally, the terminal stores the measurement configuration (complete measurement configuration) corresponding to the candidate MCG/PCell or the measurement configuration information (incremental configuration) corresponding to the candidate MCG/PCell. The measurement configuration information corresponding to the candidate MCG/PCell is used for generating the measurement configuration corresponding to the candidate MCG/PCell.

In some embodiments, the terminal stores, in the second variable corresponding to the candidate MCG/PCell, the second mobility configuration corresponding to the candidate SCG/PSCell associated with the candidate MCG/PCell.

Optionally, the first mobility configuration includes a configuration of the CHO, and the second mobility configuration includes a configuration of the CPAC.

### For Case of Terminal Executing CHO and CPAC

In some embodiments, after the terminal performs the CHO and the CPAC, the terminal clears all second variables.

In some embodiments, after the terminal performs the CHO and the CPAC, the terminal updates a first variable corresponding to a candidate MCG/PCell that the terminal determines to access to a first variable corresponding to the serving MCG/PCell of the terminal. Optionally, in the case where the first mobility configuration includes a complete measurement configuration, the terminal updates a first variable corresponding to an accessed candidate MCG/PCell to the first variable corresponding to the serving MCG/PCell. In the case where the first mobility configuration includes an incremental configuration, the terminal, based on the incremental configuration in the first variable corresponding to the accessed candidate MCG/PCell, and based on the measurement configuration of the previous serving MCG/PCell, may obtain the measurement configuration corresponding to the accessed candidate MCG/PCell, and store the measurement configuration corresponding to the accessed candidate MCG/PCell in the first variable corresponding to the accessed candidate MCG/PCell. The terminal may later update the measurement configuration corresponding to the accessed candidate MCG/PCell to the first variable of the newly accessed serving MCG of the terminal.

In some embodiments, after the terminal executes the CHO and the CPAC, the terminal clears a first variable corresponding to a candidate MCG/PCell other than the candidate MCG/PCell that the terminal determines to access.

### For First Case of Terminal Only Executing CHO but not Executing CPAC

In this case, the terminal may perform the same steps as described above in "For Case of Terminal Executing CHO and CPAC". That is, after the CHO, the terminal performs the steps described in the above case correspondingly.

### For Second Case of Terminal Only Executing CHO but not Executing CPAC

In some embodiments, in the case where the terminal executes the CHO but does not execute the CPAC, the terminal clears a second variable corresponding to a candidate MCG/PCell other than the candidate MCG/PCell that the terminal determines to access. For example, the terminal deletes all entries in all the Var variables (i.e., the second variables) storing the conditional reconfiguration configurations and corresponding to other candidate MCGs other than the candidate MCG that the terminal determines to access, that is, the terminal clears the second variables corresponding to other candidate MCGs, and the second variable corresponding to the serving MCG.

In some embodiments, in the case where the terminal executes the CHO but does not execute the CPAC, the terminal updates a second variable corresponding to the candidate MCG/PCell that the terminal determines to access to a second variable corresponding to the serving MCG/PCell of the terminal.

In summary, in the methods provided in this embodiment, when the first mobility configuration and the second mobility configuration are jointly configured, the terminal, after executing the CHO and/or the CPAC, processes the first variable and the second variable stored in the terminal. This can clear the unavailable mobility configuration and ensure that the mobility configuration currently stored by the terminal is available, which is conducive to optimizing the storage space of the terminal.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

FIG. 10 shows a flowchart of a conditional mobility configuration method provided in an embodiment of the present application. The method may be applied in a network device. The method includes the following step 1002.

At step 1002, a conditional mobility configuration is sent to a terminal.

The conditional mobility configuration includes a first mobility configuration and a second mobility configuration. The first mobility configuration is a configuration for MCG/PCell mobility. The second mobility configuration is a configuration for SCG/PSCell mobility. The first mobility configuration corresponding to a candidate MCG/PCell, and the second mobility configuration corresponding to a candidate SCG/PSCell are used for the terminal to perform associative storage.

In some embodiments, the network device sends the first mobility configuration and the second mobility configuration simultaneously to the terminal. In some embodiments, the network device sends, to the terminal, the first mobility configuration and the second mobility configuration at different timepoints.

In some embodiments, the network device is the S-MN of the terminal. In some embodiments, the network device is the S-SN of the terminal. In some embodiments, the second mobility configuration is initiated and configured by the T-MN.

For example, the second mobility configuration may be initiated by the T-MN, and is forwarded to the terminal by the S-MN.

For example, a portion of the content in the second mobility configuration may be from the T-SN.

In some embodiments, a portion of the configuration information in the first mobility configuration is used for the terminal to execute a relevant process of the second mobility configuration corresponding to a candidate SCG/PSCell associated with a candidate MCG/PCell.

In some embodiments, the first mobility configuration includes a configuration corresponding to the candidate MCG/PCell, and the configuration corresponding to the candidate MCG/PCell includes a measurement configuration corresponding to the candidate MCG/PCell.

In some embodiments, the first mobility configuration includes a configuration corresponding to the candidate MCG/PCell, and the configuration corresponding to the candidate MCG/PCell includes measurement configuration information corresponding to the candidate MCG/PCell. The measurement configuration information corresponding to the candidate MCG/PCell is used for generating the measurement configuration corresponding to the candidate MCG/PCell.

In some embodiments, the first mobility configuration includes at least one of the following:
· a configuration of a CHO;
· a configuration of MCG/PCell selective activation; and
· a configuration corresponding to L1/L2-triggered MCG/PCell mobility.

In some embodiments, the second mobility configuration includes at least one of the following:
· a configuration of a CPA;
· a configuration of a CPC;
· a configuration of SCG/PSCell selective activation; and
· a configuration corresponding to L1/L2-triggered SCG/PSCell mobility.

In some embodiments, the first mobility configuration includes at least one of the following information:
· a configuration identifier;
· an execution condition;
· a configuration corresponding to the candidate MCG/PCell, and/or a configuration corresponding to the candidate SCG/PSCell; and
· indication information.

In some embodiments, the second mobility configuration includes at least one of the following information:
· a configuration identifier;
· an execution condition;
· a configuration corresponding to the candidate MCG/PCell, and/or a configuration corresponding to the candidate SCG/PSCell; and
· indication information.

In some embodiments, the first mobility configuration includes a configuration corresponding to the candidate MCG/PCell. The second mobility configuration is carried in the configuration corresponding to the candidate MCG/PCell.

For the detailed introduction to the mobility configuration, please refer to the relevant content in the embodiment of FIG. 5, which will not be repeated in the embodiments of the present application.

In summary, in the methods provided in this embodiment, when the first mobility configuration and the second mobility configuration are jointly configured, through the associative storage performed by the terminal on the first mobility configuration of the candidate MCG/PCell and the second mobility configuration of the candidate SCG/PSCell corresponding to the candidate MCG/PCell, the terminal can be enabled to determine the second mobility configuration corresponding to a different candidate SCG/PSCell without executing the mobility operation of the first mobility configuration. For example, the terminal can determine the CPAC configuration of a different candidate SCG/PSCell without executing the CHO. This can enable the terminal to simultaneously execute the mobility operation of the first mobility configuration and the mobility operation of the second mobility configuration.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

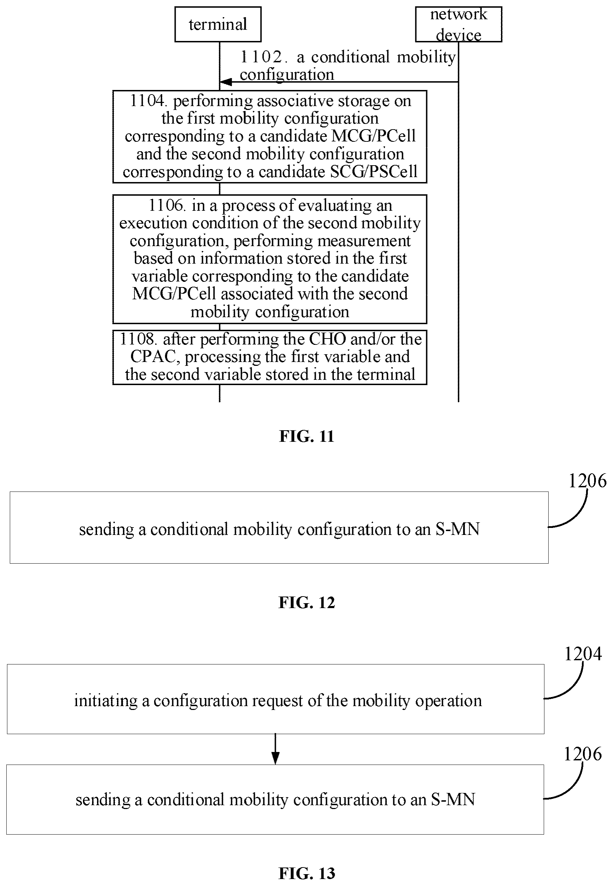

FIG. 11 shows a flowchart of a conditional mobility configuration method provided in an embodiment of the present application. The method may be used in the system shown in FIG. 4. The method includes the following steps 1102 to 1108.

At step 1102, the network device sends a conditional mobility configuration to the terminal.

The conditional mobility configuration includes a first mobility configuration and a second mobility configuration. The first mobility configuration is a configuration for MCG/PCell mobility. The second mobility configuration is a configuration for SCG/PSCell mobility. The first mobility configuration corresponding to a candidate MCG/PCell, and the second mobility configuration corresponding to a candidate SCG/PSCell are used for the terminal to perform associative storage.

For the content of the mobility configuration and the detailed introduction to the sending, please refer to the relevant content in the embodiment of FIG. 5, which will not be repeated in the embodiments of the present application.

At step 1104, the terminal performs associative storage on the first mobility configuration corresponding to the candidate MCG/PCell and the second mobility configuration corresponding to the candidate SCG/PSCell.

For the detailed introduction to the storage of the mobility configuration, please refer to the relevant content in the embodiment of FIG. 5, which will not be repeated in the embodiments of the present application.

At step 1106, the terminal, in a process of evaluating an execution condition of the second mobility configuration, performs measurement based on information stored in the first variable corresponding to the candidate MCG/PCell associated with the second mobility configuration.

For the detailed introduction to the process of evaluating the execution condition of the second mobility configuration performed by the terminal, please refer to the relevant content in the embodiment of FIG. 5, which will not be repeated in the embodiments of the present application.

At step 1108, the terminal, after executing the CHO and/or the CPAC, processes the first variable and the second variable stored in the terminal.

For the detailed introduction to the processing of the mobility configuration, please refer to the relevant content in the embodiment of FIG. 5, which will not be repeated in the embodiments of the present application.

In summary, in the methods provided in this embodiment, when the first mobility configuration and the second mobility configuration are jointly configured, through the associative storage performed by the terminal on the first mobility configuration of the candidate MCG/PCell and the second mobility configuration of the candidate SCG/PSCell corresponding to the candidate MCG/PCell, the terminal can be enabled to determine the second mobility configuration corresponding to a different candidate SCG/PSCell without executing the mobility operation of the first mobility configuration. For example, the terminal can determine the CPAC configuration of a different candidate SCG/PSCell without executing the CHO. This can enable the terminal to simultaneously execute the mobility operation of the first mobility configuration and the mobility operation of the second mobility configuration.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

FIG. 12 shows a flowchart of a conditional mobility configuration method provided in an embodiment of the present application. The method may be applied in a T-MN. The method includes the following step 1206.

At step 1206, a conditional mobility configuration is sent to an S-MN.

The conditional mobility configuration is used for the terminal to execute a mobility operation of the mobility configuration when the terminal determines that an execution condition of the mobility configuration is met. Optionally, the mobility configuration is initiated and configured by the T-MN. Optionally, the mobility configuration is a configuration of the CPAC. It should be noted that the mobility configuration may also be other configurations, such as a configuration of the SCG/PSCell selective activation, which is not limited in the embodiments of the present application.

The mobility configuration includes one or more of the following: an execution condition of a mobility operation, a measurement configuration corresponding to the execution condition of the mobility operation, a configuration of a candidate MCG/PCell, and a configuration of a candidate SCG/PSCell. In some embodiments, the measurement configuration corresponding to the execution condition of the mobility operation, the configuration of the candidate MCG/PCell, and the configuration of the candidate SCG/PSCell are used for the terminal to perform measurement to determine whether a result of the measurement meets the execution condition of the mobility operation, and thus determine whether to execute the mobility operation.

The mobility configuration is used for the S-MN to update the measurement configuration of the terminal, and is forwarded by the S-MN to the terminal. That is, after the S-MN receives the above mobility configuration, the S-MN updates the measurement configuration of the terminal by using the mobility configuration, and sends the mobility configuration to the terminal.

In some embodiments, the T-MN determines, through initiating a configuration request of the mobility operation, the execution condition of the mobility operation, and the measurement configuration corresponding to the execution condition of the mobility operation. Optionally, the configuration request of the mobility operation initiated by the T-MN may be triggered in one of two manners.

### First Manner

In some embodiments, the T-MN initiates the configuration request of the mobility operation autonomously.

### Second Manner

In some embodiments, the T-MN receives a request message sent by the S-MN, where the request message is used for requesting the T-MN to initiate the configuration request of the mobility operation. In some embodiments, the request message is also used for requesting the T-MN to prepare for the access of the relevant terminal, and reserve corresponding resources.

In some embodiments, the conditional mobility configuration sent by the T-MN to the S-MN is carried in a response message, where the response message is used for responding to the request message sent by the S-MN.

In some embodiments, the T-MN may also receive a notification message sent by the S-MN. In some embodiments, the notification message is used for requesting the T-MN to update the above conditional mobility configuration, or is used for indicating that a measurement identifier corresponding to the execution condition of the mobility operation is unavailable. In some embodiments, the measurement identifier is information for identifying the execution condition. The measurement identifier being unavailable includes the measurement identifier being occupied by another measurement identifier.

For example, the measurement identifier being unavailable includes that the measurement identifier has already been configured to the terminal, and the corresponding configuration information (execution condition) cannot be updated, such as being associated with the mobility configuration corresponding to another candidate cell. In this case, the terminal cannot use the mobility configuration initiated by the T-MN.

In some embodiments, the T-MN, upon receiving the above notification message, updates the above conditional mobility configuration, and sends the updated conditional mobility configuration to the S-MN, facilitating that the S-MN can forward the updated conditional mobility configuration to the terminal for use.

Optionally, the above notification message carries an available or unavailable measurement identifier. In some embodiments, the available measurement identifier is an unoccupied measurement identifier, and the unavailable measurement identifier is an occupied measurement identifier. In some embodiments, the T-MN may be informed of the available or unavailable measurement identifier upon receiving the notification message. Thus, when the conditional mobility configuration is updated, the T-MN is capable of configuring a configuration corresponding to the unoccupied (available) measurement identifier, and providing the configuration to the terminal for use.

In summary, in the methods provided in this embodiment, the mobility configuration is sent by the T-MN to the S-MN, and is forwarded to the terminal, enabling the terminal to be informed of the mobility configuration initiated by the T-MN without accessing the T-MN. For example, the terminal can determine the CPAC configurations of different candidate SCGs/PSCells without executing the CHO. This can enable the terminal to simultaneously execute the CHO and the CPAC.

In some embodiments, the conditional mobility configuration sent by the T-MN to the S-MN is determined by the T-MN through initiating a configuration request of the mobility operation. As shown in FIG. 13, based on the embodiment shown in FIG. 12, the method further includes the following step 1204.

At step 1204, a configuration request of the mobility operation is initiated.

The T-MN determines, through initiating the configuration request of the mobility operation, the execution condition of the mobility operation, and the measurement configuration corresponding to the execution condition of the mobility operation.

In summary, in the methods provided in this embodiment, the T-MN determines, through initiating the configuration request of the mobility operation, the execution condition of the mobility operation, and the measurement configuration corresponding to the execution condition of the mobility operation, achieving that the mobility configuration is sent to the S-MN and is forwarded to the terminal. This provides a manner of determining the mobility configuration by the T-MN.

In some embodiments, the T-MN autonomously initiates the configuration request of the mobility operation.

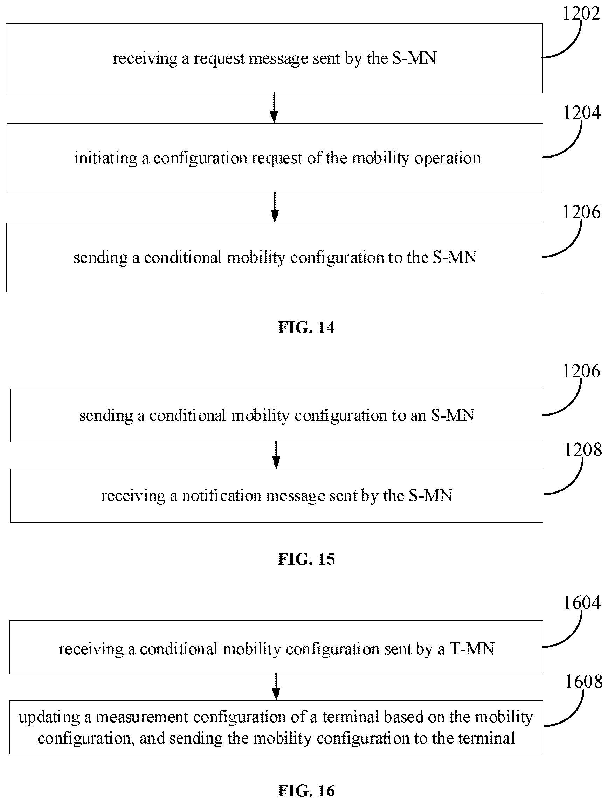

In some embodiments, the T-MN receives a request message sent by the S-MN, and thus initiates the configuration request of the mobility operation. As shown in FIG. 14, based on the embodiment shown in FIG. 13, the method further includes the following step 1202.

At step 1202, a request message sent by the S-MN is received.

The request message is used for requesting the T-MN to initiate the configuration request of the mobility operation.

In some embodiments, the request message is also used for requesting the T-MN to prepare for the access of the relevant terminal, and reserve corresponding resources. In some embodiments, the conditional mobility configuration sent by the T-MN to the S-MN is carried in a response message, where the response message is used for responding to the request message sent by the S-MN.

In summary, in the methods provided in this embodiment, through the request of the S-MN, the T-MN is caused to initiate the configuration request of the mobility operation to determine the execution condition of the mobility operation and the measurement configuration corresponding to the execution condition of the mobility operation, achieving that the mobility configuration is sent to the S-MN and is forwarded to the terminal. This provides a manner of triggering the T-MN by the S-MN to determine the mobility configuration, improving the flexibility of the T-MN in determining the mobility configuration.

In some embodiments, the T-MN may also receive a notification message sent by the S-MN. As shown in FIG. 15, based on the embodiment shown in FIG. 12, the method further includes the following step 1208.

At step 1208, a notification message sent by the S-MN is received.

The notification message is used for requesting the T-MN to update the above conditional mobility configuration, or is used for indicating that a measurement identifier corresponding to the execution condition of the mobility operation of the conditional mobility configuration is unavailable. In some embodiments, the measurement identifier is information for identifying the execution condition. The measurement identifier being unavailable includes the measurement identifier being occupied by another measurement identifier.

In some embodiments, the T-MN, upon receiving the above notification message, updates the above conditional mobility configuration, and sends the updated conditional mobility configuration to the S-MN, facilitating that the S-MN can forward the updated conditional mobility configuration to the terminal for use.

Optionally, the above notification message carries an available or unavailable measurement identifier. In some embodiments, the available measurement identifier is an unoccupied measurement identifier, and the unavailable measurement identifier is an occupied measurement identifier. In some embodiments, the T-MN may be informed of the available or unavailable measurement identifier upon receiving the notification message. Thus, when the conditional mobility configuration is updated, the T-MN is capable of configuring a configuration corresponding to the unoccupied (available) measurement identifier, and providing the configuration to the terminal for use.

In summary, in the methods provided in this embodiment, through the notification message sent by the S-MN, the T-MN is enabled to be informed of whether the mobility configuration initiated by it is available, thereby enabling the T-MN to update the mobility configuration when the mobility configuration initiated by the T-MN is unavailable. This achieves the guarantee, through the coordination between the network devices, of the availability of the mobility configuration initiated by the T-MN.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

FIG. 16 shows a flowchart of a conditional mobility configuration method provided in an embodiment of the present application. The method may be applied in an S-MN. The method includes the following steps 1604 and 1608.

At step 1604, a conditional mobility configuration sent by a T-MN is received.

The conditional mobility configuration is used for the terminal to execute a mobility operation of the mobility configuration when the terminal determines that an execution condition of the mobility configuration is met. Optionally, the mobility configuration is initiated and configured by the T-MN. Optionally, the mobility configuration is a configuration of the CPAC. It should be noted that the mobility configuration may also be other configurations, such as a configuration of the SCG/PSCell selective activation, which is not limited in the embodiments of the present application.

For the detailed introduction to the mobility configuration, please refer to the relevant content in the embodiment of FIG. 12, which will not be repeated in the embodiments of the present application.

At step 1608, a measurement configuration of a terminal is updated based on the mobility configuration, and the mobility configuration is sent to the terminal.

In summary, in the methods provided in this embodiment, the mobility configuration is sent by the T-MN to the S-MN, and is forwarded to the terminal, enabling the terminal to be informed of the mobility configuration initiated by the T-MN without accessing the T-MN. For example, the terminal can determine the CPAC configurations of different candidate SCGs/PSCells without executing the CHO. This can enable the terminal to simultaneously execute the CHO and the CPAC.

In some embodiments, the conditional mobility configuration sent by the T-MN to the S-MN is determined by the T-MN through initiating a configuration request of the mobility operation.

In some embodiments, the T-MN autonomously initiates the configuration request of the mobility operation.

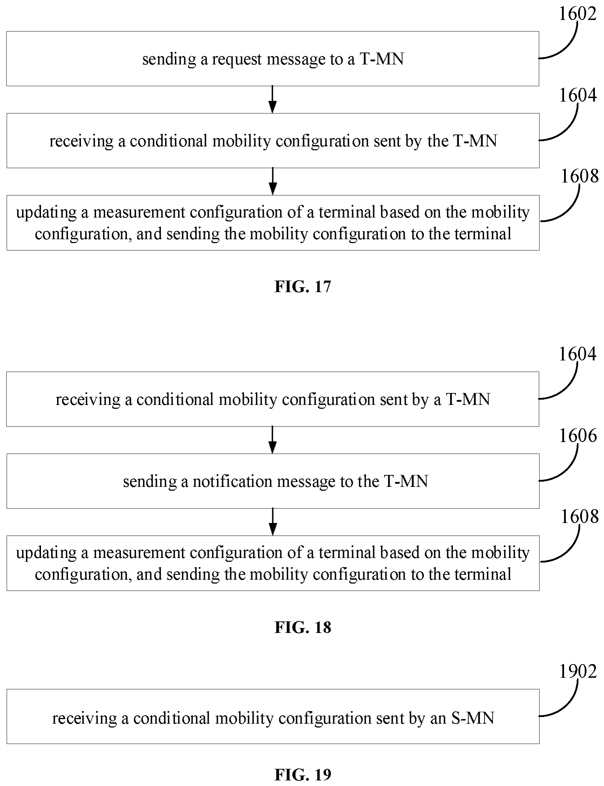

In some embodiments, the T-MN receives a request message sent by the S-MN, and thus initiates the configuration request of the mobility operation. As shown in FIG. 17, based on the embodiment shown in FIG. 16, the method further includes the following step 1602.

At step 1602, a request message is sent to the T-MN.

The request message is used for requesting the T-MN to initiate the configuration request of the mobility operation.

In some embodiments, the request message is also used for requesting the T-MN to prepare for the access of the relevant terminal, and reserve corresponding resources. In some embodiments, the conditional mobility configuration sent by the T-MN to the S-MN is carried in a response message, where the response message is used for responding to the request message sent by the S-MN.

In summary, in the methods provided in this embodiment, through the request of the S-MN, the T-MN is caused to initiate the configuration request of the mobility operation to determine the execution condition of the mobility operation and the measurement configuration corresponding to the execution condition of the mobility operation, achieving that the mobility configuration is sent to the S-MN and is forwarded to the terminal. This provides a manner of triggering the T-MN by the S-MN to determine the mobility configuration, improving the flexibility of the T-MN in determining the mobility configuration.

In some embodiments, the S-MN may also send a notification message to the T-MN. As shown in FIG. 18, based on the embodiment shown in FIG. 16, the method further includes the following step 1606.

At step 1606, a notification message is sent to the T-MN.

The notification message is used for requesting the T-MN to update the above conditional mobility configuration, or is used for indicating that a measurement identifier corresponding to the execution condition of the mobility operation of the conditional mobility configuration is unavailable. In some embodiments, the measurement identifier is information for identifying the execution condition. The measurement identifier being unavailable includes the measurement identifier being occupied by another measurement identifier.

In some embodiments, the T-MN, upon receiving the above notification message, updates the above conditional mobility configuration, and sends the updated conditional mobility configuration to the S-MN, facilitating that the S-MN can forward the updated conditional mobility configuration to the terminal for use.

Optionally, the above notification message carries an available or unavailable measurement identifier. In some embodiments, the available measurement identifier is an unoccupied measurement identifier, and the unavailable measurement identifier is an occupied measurement identifier. In some embodiments, the T-MN may be informed of the available or unavailable measurement identifier upon receiving the notification message. Thus, when the conditional mobility configuration is updated, the T-MN is capable of configuring a configuration corresponding to the unoccupied (available) measurement identifier, and providing the configuration to the terminal for use.

In summary, in the methods provided in this embodiment, through the notification message sent by the S-MN, the T-MN is enabled to be informed of whether the mobility configuration initiated by it is available, thereby enabling the T-MN to update the mobility configuration when the mobility configuration initiated by the T-MN is unavailable. This achieves the guarantee, through the coordination between the network devices, of the availability of the mobility configuration initiated by the T-MN.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

FIG. 19 shows a flowchart of a conditional mobility configuration method provided in an embodiment of the present application. The method may be applied in a terminal. The method includes the following step 1902.

At step 1902, a conditional mobility configuration sent by an S-MN is received.

The mobility configuration is sent by the T-MN to the S-MN. The mobility configuration includes one or more of the following: an execution condition of a mobility operation, a measurement configuration corresponding to the execution condition of the mobility operation, a configuration of a candidate MCG/PCell, and a configuration of a candidate SCG/PSCell. The mobility configuration is used for updating the measurement configuration of the terminal.

For the detailed introduction to the mobility configuration, please refer to the relevant content in the embodiment of FIG. 11, which will not be repeated in the embodiments of the present application.

In summary, in the methods provided in this embodiment, the mobility configuration is sent by the T-MN to the S-MN, and is forwarded to the terminal, enabling the terminal to be informed of the mobility configuration initiated by the T-MN without accessing the T-MN. For example, the terminal can determine the CPAC configurations of different candidate SCGs/PSCells without executing the CHO. This can enable the terminal to simultaneously execute the CHO and the CPAC.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

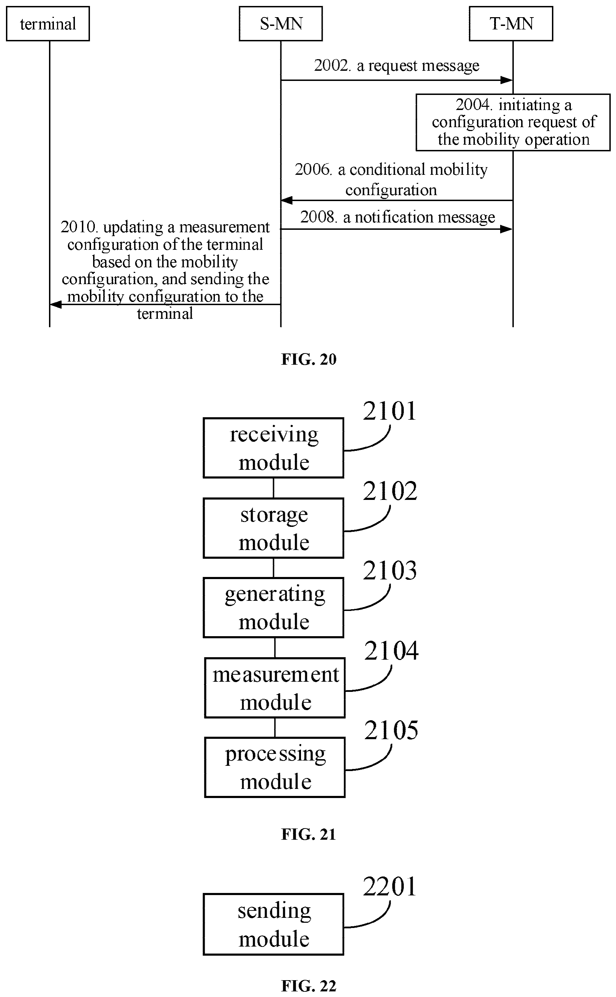

FIG. 20 shows a flowchart of a conditional mobility configuration method provided in an embodiment of the present application. In some embodiments, the method may be applied in a system shown in FIG. 4. The method includes the following steps 2002 and 2010.

At step 2002, an S-MN sends a request message to a T-MN.

The request message is used for requesting the T-MN to initiate a configuration request of a mobility operation.

In some embodiments, the request message is also used for requesting the T-MN to prepare for the access of the relevant terminal, and reserve corresponding resources. In some embodiments, the conditional mobility configuration sent by the T-MN to the S-MN is carried in a response message, where the response message is used for responding to the request message sent by the S-MN.

At step 2004, the T-MN initiates the configuration request of the mobility operation.

The T-MN initiates the configuration request of the mobility operation to determine an execution condition of the mobility operation, and a measurement configuration corresponding to the execution condition of the mobility operation.

At step 2006, the T-MN sends a conditional mobility configuration to the S-MN.

The conditional mobility configuration is used for the terminal to execute a mobility operation of the mobility configuration when the terminal determines that an execution condition of the mobility configuration is met. Optionally, the mobility configuration is initiated and configured by the T-MN. Optionally, the mobility configuration is a configuration of the CPAC.

For the detailed introduction to the mobility configuration, please refer to the relevant content in the embodiment of FIG. 12, which will not be repeated in the embodiments of the present application.

At step 2008, the S-MN sends a notification message to the T-MN.

The notification message is used for requesting the T-MN to update the above conditional mobility configuration, or is used for indicating that a measurement identifier corresponding to the execution condition of the mobility operation of the conditional mobility configuration is unavailable. In some embodiments, the measurement identifier is information for identifying the execution condition. The measurement identifier being unavailable includes the measurement identifier being occupied by another measurement identifier.

For the detailed introduction to the notification message, please refer to the relevant content in the embodiment of FIG. 12, which will not be repeated in the embodiments of the present application.

At step 2010, the S-MN updates the measurement configuration of the terminal based on the mobility configuration, and sends the mobility configuration to the terminal.

In summary, in the methods provided in this embodiment, the mobility configuration is sent by the T-MN to the S-MN, and is forwarded to the terminal, enabling the terminal to be informed of the mobility configuration initiated by the T-MN without accessing the T-MN. For example, the terminal can determine the CPAC configurations of different candidate SCGs/PSCells without executing the CHO. This can enable the terminal to simultaneously execute the CHO and the CPAC.

It should be noted that the above embodiments in the present application may be combined with other embodiments, steps in other embodiments, and specific implementations in steps of other embodiments without contradiction, thereby obtaining new embodiments. Moreover, the sequence of the method steps provided in the embodiments of the present application may be appropriately adjusted, and the steps may also be added or removed according to the situation.

The present application provides invention point 1 and invention point 2.

### Introduction to Invention Point 1 of Present Application

Each candidate MCG/PCell corresponds to a separate Var (Variable) variable for storing the measurement configuration of the candidate MCG/PCell, and a separate Var variable for storing the CPA/CPC configuration corresponding to this candidate MCG/PCell. In some embodiments, the CHO in this invention point may also be the MCG selective activation, and the CPA/CPC may also be the SCG selective activation.

The following illustrates a conditional mobility configuration method provided in an embodiment of the present application.
1. The UE receives a conditional mobility configuration sent by the network side, where the conditional mobility configuration includes a configuration for MCG/PCell mobility, and a configuration for SCG/PSCell mobility. The configuration for the mobility of the SCG in the configuration information is associated with a corresponding candidate MCG. It should be noted that the MCG hereinafter may refer to the MCG/PCell, and the SCG hereinafter may refer to the SCG/PSCell.
1.1. The mobility configuration of the MCG includes one or more of the following: a configuration of a CHO, a configuration of MCG selective activation, and a configuration corresponding to L1/L2-triggered MCG mobility (LTM-MCG).
1.2. The mobility configuration of the SCG includes one or more of the following: a configuration of a CPA, a configuration of a CPC, a configuration of SCG selective activation, and a configuration corresponding to L1/L2-triggered SCG mobility (LTM-SCG).
1.3. The configuration of the CHO, the configuration of the CPA, the configuration of the CPC, the configuration of the MCG selective activation, or the configuration of the SCG selective activation includes one or more of the following information:
1.3.1, a configuration identifier;
1.3.2, an execution condition;
1.3.3, a configuration corresponding to the corresponding candidate MCG and/or SCG;
1.3.4, indication information indicating the purpose of the configuration, such as being used for one or more of: the CHO, the CPA, the CPC, the MCG selective activation, and the SCG selective activation.
1.4. Configuration information corresponding to the candidate MCG includes measurement configuration information corresponding to the candidate MCG.
1.5. For example, the configuration information corresponding to the candidate MCG includes a mobility configuration of the SCG.

For example, the UE receives the conditional mobility configuration information, and the conditional mobility configuration information includes the configuration information of the CHO and the configuration information of the associated one or more CPAs/CPCs. In this example, the configuration information of the CHO includes the execution condition of the CHO, and the configuration corresponding to the candidate MCG, where the configuration corresponding to this MCG includes one or more CPC/CPA configurations, and the corresponding configuration information of the subsequent MCG. The subsequent MCG is an MCG that the terminal may switch to when the terminal switches again later after switching to the candidate MCG.

2. Based on 1, when the UE receives a joint mobility configuration including a configuration for the MCG mobility and a configuration for the SCG mobility sent by the network side, the UE stores the received mobility configuration information.

3. Based on 2, the UE stores the measurement configurations corresponding to the candidate MCGs. Each candidate MCG corresponds to a separate first variable (the variable is a UE variable, which may also be referred to as a Var variable) for storing the measurement configuration, and is used for storing the measurement configuration information corresponding to the candidate MCG sent by the network side to the UE. In some embodiments, the first variable may be a measurement configuration variable (VarMeasConfig).

3.1. Based on the measurement configuration corresponding to the current serving MCG of the UE (through the current cumulative configuration stored in the first variable storing the measurement configuration of the serving MCG), and according to the measurement configuration information (incremental configuration) included in the configuration corresponding to the candidate MCG, the measurement configuration corresponding to the candidate MCG (complete measurement configuration corresponding to this candidate MCG) is generated.

The following are examples.

3.1.1. The measurement configuration information (incremental configuration) included in the configuration corresponding to the candidate MCG may include one or more of the following information: a configuration add or modify list, a configuration remove list, a measurement amount configuration, a measurement configuration (s-MeasureConfig) (e.g., a measurement startup threshold), and a measurement gap configuration.

3.1.2. The first variable storing the measurement configuration may include one or more of the following information: a configuration list, a measurement amount configuration, a measurement configuration (s-MeasureConfig) (e.g., a measurement startup threshold), and a measurement gap configuration.

In some embodiments, the configuration add or modify list (...AddModList) and the configuration removal list (...RemoveList) may be one or more of the following:
· a measurement object to remove list (measObjectToRemoveList);
· a measurement object to add or modify list (measObjectToAddModList);
· a report configuration to remove list (reportConfigToRemoveList);
· a report configuration to add or modify list (reportConfigToAddModList);
· a measurement identifier to remove list (measIdToRemoveList); and
· a measurement identifier to add or modify list (measIdToAddModList).

In some embodiments, the configuration list includes one or more of the following: a measurement identifier list (measIdList), a measurement object list (measObjectList), and a report configuration list (reportConfigList).

In some embodiments, the specific steps for generating the measurement configuration corresponding to the candidate MCG based on the measurement configuration of the current serving MCG and the incremental measurement configuration information included in the configuration corresponding to the candidate MCG may be that: the UE obtains the configuration corresponding to the candidate MCG by performing adding or modifying on the corresponding configuration of the current serving MCG based on the configuration add or modify list included in the incremental measurement configuration of the candidate MCG; the UE obtains the configuration corresponding to the candidate MCG by removing the corresponding configuration of the current serving MCG based on the configuration removal list included in the incremental measurement configuration of the candidate MCG; the UE obtains the configuration corresponding to the candidate MCG by updating the corresponding configuration of the current serving MCG based on the measurement amount configuration, the s-MeasureConfig, and the measurement gap configuration in the incremental configuration information (if any), and performs the storage through the corresponding first variable of this candidate MCG.

3.2. The measurement configuration information (incremental configuration) included in the configuration corresponding to the candidate MCG is stored through the first variable corresponding to this candidate MCG.

4. Based on 2, the UE stores the configurations for the mobility of the SCGs. Each candidate MCG corresponds to a separate second variable for storing the mobility configuration (the variable is a UE variable, which may also be referred to as a Var variable), and the variable is used for storing the corresponding mobility configurations of one or more candidate SCGs corresponding to the candidate MCG.

In some embodiments, the second variable may be a conditional reconfiguration variable (VarConditionalReconfig).

In some embodiments, the second variable includes a field CondReconfigList used for indicating the mobility configuration. The field is indicated by a conditional reconfiguration to add or modify list (CondReconfigToAddModList).

4.1. For example, for a joint mobility configuration, if the configuration corresponding to the candidate MCG included in the mobility configuration of the candidate MCG includes the mobility configuration of one or more candidate SCGs associated with the candidate MCG, then, in response to the UE receiving the joint mobility configuration, the UE reads the configuration corresponding to the candidate MCG in the mobility configuration of the candidate MCG, and stores, by using the second variable corresponding to this candidate MCG, the included mobility configuration of one or more candidate SCGs. For example, the joint mobility configuration is CHO+CPC, with a second variable corresponding to each candidate MCG of the CHO, and the UE stores, by using the second variable, one or more (all) CPC configurations corresponding to the candidate MCG configured with the CHO.

5. Based on the above 1-4, for the conditional trigger-based SCG mobility (including the CPA/CPC/SCG selective activation), in the process of evaluating the execution condition of the SCG mobility, the UE performs measurement based on the measurement configuration stored in the first variable corresponding to the candidate MCG associated with the mobility configuration of this SCG, and evaluates whether the event corresponding to the execution condition is met.

For example, in evaluating the CPAC event, the UE performs the measurement based on the measurement configuration information stored in the first variable corresponding to the candidate MCG associated with this CPAC, and evaluates whether the CPAC event is met.

5.1. For the method of generating the first variable described in 3.1, the UE may perform the measurement based only on the measurement configuration stored in the first variable corresponding to the candidate MCG, and evaluates whether the event corresponding to the execution condition of the mobility configuration of the candidate SCG associated with this candidate MCG is met.

5.2. For the method of generating the first variable described in 3.2, the UE may obtain, based on the measurement configuration stored in the first variable corresponding to the candidate MCG and the measurement configuration corresponding to the current serving MCG, the measurement configuration corresponding to this candidate MCG for measurement, and evaluates whether the event corresponding to the execution condition corresponding to the mobility configuration of the candidate SCG associated with this candidate MCG is met.

6. Based on the above 1-4, for the joint configuration of the CHO and the CPAC.

6.1. After the UE executes the CHO and the CPAC, the UE deletes all the entries in all the Var variables (second variables) storing the conditional reconfiguration configurations (i.e., clearing the second variable corresponding to each candidate MCG, and the second variable corresponding to the serving MCG). The UE updates the Var variable storing the measurement configuration and corresponding to the accessed candidate MCG to the first variable of the serving MCG (based on 3.1), or based on the first variable storing the measurement configuration and corresponding to the accessed candidate MCG, updates the first variable of the serving MCG to the first variable of the newly accessed serving MCG (based on 3.2). The UE clears the Var variables (first variables) storing the measurement configurations and corresponding to other candidate MCGs.

6.2. For the joint configuration of the CHO and the CPAC, if the UE executes only the CHO but does not execute the CPAC, the UE follows the steps in 6.1.

6.3. For the joint configuration of the CHO and the CPAC, if the UE executes only the CHO but does not execute the CPAC, the UE deletes all the entries in all the Var variables (second variables) storing the conditional reconfiguration configurations and corresponding to other candidate MCGs (i.e., clearing the second variables corresponding to other candidate MCGs, and the second variable corresponding to the serving MCG). The UE updates the second variable corresponding to the accessed candidate MCG to the second variable of the serving MCG.

It should be noted that the content in each paragraph of the above embodiments (identified by the numeral x) may be implemented as a separate embodiment, and the content under the content in each paragraph (identified by the numeral x.y or x.y.z) may be implemented as one of the possible implementations of its corresponding embodiment.

### Introduction to Invention Point 2 of Present Application

The T-MN sends the measurement configuration related to the execution condition of the CPAC to the S-MN, and the S-MN may directly forward the corresponding measurement configuration to the UE. The S-MN may coordinate the measurement configurations of the T-MNs based on the measurement configuration information, and then update the measurement configuration of the UE and send the measurement configuration of the CHO+CPAC to the UE. If the measurement identifier corresponding to the execution condition of the CPAC is occupied, the S-MN shall notify the T-MN and request the T-MN to update the execution condition of the CPAC. The S-MN sends the available measurement identifier to the T-MN, thereby avoiding the T-MN to configure unavailable execution conditions and measurement configurations.

The following illustrates a method of configuring the CPAC provided in an embodiment of the present application.
1. The S-MN sends a request message (used for performing a mobility configuration request) to the T-MN, requesting to prepare for the access of the relevant UE and reserve corresponding resources.
2. The T-MN initiates, autonomously or based on the request message of the S-MN, a configuration request of one or more CPACs, and determines the execution condition of the CPAC, and the measurement configuration corresponding to the execution condition of the CPAC.
3. The T-MN sends, to the S-MN, e.g., through a response message, the measurement configuration information corresponding to the execution condition, the execution condition of the CPAC, the configuration information of the candidate MCG, and the configuration information of the candidate SCG, where the above information may be included in the mobility configuration information.
4. The S-MN updates the measurement configuration of the UE based on the information described in 4, and forwards the mobility configuration information sent by the T-MN to the S-MN to the UE.
5. In 3, if the S-MN finds that the measurement identifier corresponding to the execution condition of the CPAC sent by the T-MN is unavailable (e.g., this measurement identifier has already been configured to the UE, and the corresponding configuration information cannot be updated, such as being associated with the mobility configuration corresponding to another candidate cell), the S-MN shall notify the T-MN and request the T-MN to update the execution condition of the CPAC, e.g., to update the measurement identifier corresponding to the execution condition. In some embodiments, whether the measurement identifier is available may be determined based on the implementation algorithm of the S-MN.
6. Based on 5, the S-MN may include the available measurement identifier in the notification message to the T-MN, thereby avoiding that the execution condition of the CPAC configured by the T-MN is associated with an unavailable measurement identifier.

It should be noted that the content in each paragraph of the above embodiments (identified by the numeral x) may be implemented as a separate embodiment, and the content under the content in each paragraph may be implemented as one of the possible implementations of its corresponding embodiment.

It should be noted that the above embodiments in the present application may be combined with other embodiments, steps in other embodiments, and specific implementations in steps of other embodiments without contradiction. Moreover, the sequence of the method steps provided in the embodiments of the present application may be appropriately adjusted, and the steps may also be added or removed according to the situation. Any skilled person familiar with the technical field of the present application can easily think of variations of the method within the technical scope disclosed by the present application, all of which shall be covered by the scope of protection of the present application, and therefore will not be further elaborated.

FIG. 21 shows a structural block diagram of a conditional mobility configuration apparatus provided in an exemplary embodiment of the present application. As shown in FIG. 21, the apparatus includes:
a receiving module 2101, configured to receive a conditional mobility configuration sent by a network device, where the conditional mobility configuration includes a first mobility configuration and a second mobility configuration, the first mobility configuration is a configuration for MCG/PCell mobility, and the second mobility configuration is a configuration for SCG/PSCell mobility; and
a storage module 2102, configured to perform associative storage on the first mobility configuration corresponding to a candidate MCG/PCell and the second mobility configuration corresponding to a candidate SCG/PSCell.

In an optional design, the storage module 2102 is configured to store, in a variable corresponding to the candidate MCG/PCell, the first mobility configuration corresponding to the candidate MCG/PCell, and/or the second mobility configuration corresponding to the candidate SCG/PSCell associated with the candidate MCG/PCell.

In an optional design, each candidate MCG/PCell corresponds to a separate first variable; and the storage module 2102 is configured to store, in the first variable corresponding to the candidate MCG/PCell, the first mobility configuration corresponding to the candidate MCG/PCell.

In an optional design, each candidate MCG/PCell corresponds to a separate second variable; and the storage module 2102 is configured to store, in the second variable corresponding to the candidate MCG/PCell, the second mobility configuration corresponding to the candidate SCG/PSCell associated with the candidate MCG/PCell.

In an optional design, the storage module 2102 is configured to store, in the first variable corresponding to the candidate MCG/PCell, a measurement configuration corresponding to the candidate MCG/PCell; where the measurement configuration corresponding to the candidate MCG/PCell is determined based on the first mobility configuration.

In a possible design, the first mobility configuration includes a configuration corresponding to the candidate MCG/PCell, and the configuration corresponding to the candidate MCG/PCell includes the measurement configuration corresponding to the candidate MCG/PCell.

In a possible design, the first mobility configuration includes a configuration corresponding to the candidate MCG/PCell, and the configuration corresponding to the candidate MCG/PCell includes measurement configuration information corresponding to the candidate MCG/PCell; and the apparatus further includes a generating module 2103 configured to generate the measurement configuration corresponding to the candidate MCG/PCell based on a measurement configuration of a serving MCG/PCell and the measurement configuration information corresponding to the candidate MCG/PCell.

In a possible design, the apparatus further includes a measurement module 2104 configured to, in a process of evaluating an execution condition of the second mobility configuration performed by the apparatus, perform measurement based on the measurement configuration stored in the first variable corresponding to the candidate MCG/PCell associated with the second mobility configuration.

In a possible design, the first mobility configuration includes a configuration corresponding to the candidate MCG/PCell, and the configuration corresponding to the candidate MCG/PCell includes measurement configuration information corresponding to the candidate MCG/PCell; and the storage module 2102 is configured to store, in the first variable corresponding to the candidate MCG/PCell, the measurement configuration information corresponding to the candidate MCG/PCell; where the measurement configuration information corresponding to the candidate MCG/PCell is used for generating a measurement configuration corresponding to the candidate MCG/PCell.

In a possible design, the apparatus further includes a measurement module 2104 configured to, in a process of evaluating an execution condition of the second mobility configuration performed by the apparatus, perform measurement based on a measurement configuration of a serving MCG/PCell and the measurement configuration information corresponding to the candidate MCG/PCell; where the measurement configuration of the serving MCG/PCell and the measurement configuration information corresponding to the candidate MCG/PCell are used for the apparatus to generate the measurement configuration corresponding to the candidate MCG/PCell.

In a possible design, the first mobility configuration includes a configuration of a CHO, and the second mobility configuration includes a configuration of a CPAC; and the apparatus further includes a processing module 2105 configured to, when the apparatus executes the CHO and the CPAC, or the apparatus executes the CHO but does not execute the CPAC, clear all second variables.

In a possible design, the first mobility configuration includes a configuration of a CHO, and the second mobility configuration includes a configuration of a CPAC; and the apparatus further includes a processing module 2105 configured to, when the apparatus executes the CHO and the CPAC, or the apparatus executes the CHO but does not execute the CPAC, update a first variable corresponding to a candidate MCG/PCell that the apparatus determines to access to a first variable corresponding to a serving MCG/PCell of the apparatus.

In a possible design, the first mobility configuration includes a configuration of a CHO, and the second mobility configuration includes a configuration of a CPAC; and the apparatus further includes a processing module 2105 configured to, when the apparatus executes the CHO and the CPAC, or the apparatus executes the CHO but does not execute the CPAC, clear a first variable corresponding to a candidate MCG/PCell other than the candidate MCG/PCell that the apparatus determines to access.

In a possible design, the first mobility configuration includes a configuration of a CHO, and the second mobility configuration includes a configuration of a CPAC; and the apparatus further includes a processing module 2105 configured to, when the apparatus executes the CHO but does not execute the CPAC, clear a second variable corresponding to a candidate MCG/PCell other than a candidate MCG/PCell that the apparatus determines to access.

In a possible design, the first mobility configuration includes a configuration of a CHO, and the second mobility configuration includes a configuration of a CPAC; and the apparatus further includes a processing module 2105 configured to, when the apparatus executes the CHO but does not execute the CPAC, update a second variable corresponding to the candidate MCG/PCell that the apparatus determines to access to a second variable corresponding to a serving MCG/PCell of the apparatus.

In a possible design, a portion of configuration information in the first mobility configuration is used for the terminal to execute a relevant process of the second mobility configuration corresponding to the candidate SCG/PSCell associated with the candidate MCG/PCell.

In a possible design, the first mobility configuration includes at least one of:
a configuration of a CHO;
a configuration of MCG/PCell selective activation; and
a configuration corresponding to layer 1 or layer 2 triggered MCG/PCell mobility.

In a possible design, the second mobility configuration includes at least one of:
a configuration of a CPA;
a configuration of a CPC;
a configuration of SCG/PSCell selective activation; and
a configuration corresponding to layer 1 or layer 2 triggered SCG/PSCell mobility.

In a possible design, the first mobility configuration includes at least one of the following information:
a configuration identifier;
an execution condition;
a configuration corresponding to the candidate MCG/PCell, and/or a configuration corresponding to the candidate SCG/PSCell; and
indication information, where the indication information is used for indicating a purpose of a configuration indicated by the information.

In a possible design, the second mobility configuration includes at least one of the following information:
a configuration identifier;
an execution condition;
a configuration corresponding to the candidate MCG/PCell, and/or a configuration corresponding to the candidate SCG/PSCell; and
indication information, where the indication information is used for indicating a purpose of a configuration indicated by the information.

In a possible design, the first mobility configuration includes a configuration corresponding to the candidate MCG/PCell, and the second mobility configuration is carried in the configuration corresponding to the candidate MCG/PCell.

FIG. 22 shows a structural block diagram of a conditional mobility configuration apparatus provided in an exemplary embodiment of the present application. As shown in FIG. 22, the apparatus includes a sending module 2201 configured to send a conditional mobility configuration to a terminal, where the conditional mobility configuration includes a first mobility configuration and a second mobility configuration; where the first mobility configuration is a configuration for MCG/PCell mobility; the second mobility configuration is a configuration for SCG/PSCell mobility; and the first mobility configuration corresponding to a candidate MCG/PCell, and the second mobility configuration corresponding to a candidate SCG/PSCell are used for the terminal to perform associative storage.

In a possible design, the first mobility configuration includes a configuration corresponding to the candidate MCG/PCell, and the configuration corresponding to the candidate MCG/PCell includes a measurement configuration corresponding to the candidate MCG/PCell.

In a possible design, the first mobility configuration includes a configuration corresponding to the candidate MCG/PCell, and the configuration corresponding to the candidate MCG/PCell includes measurement configuration information corresponding to the candidate MCG/PCell; and the measurement configuration information corresponding to the candidate MCG/PCell is used for generating a measurement configuration corresponding to the candidate MCG/PCell.

In a possible design, a portion of configuration information in the first mobility configuration is used for the terminal to execute a relevant process of the second mobility configuration corresponding to the candidate SCG/PSCell associated with the candidate MCG/PCell.

In a possible design, the first mobility configuration includes at least one of:
a configuration of a CHO;
a configuration of MCG/PCell selective activation; and
a configuration corresponding to layer 1 or layer 2 triggered MCG/PCell mobility.

In a possible design, the second mobility configuration includes at least one of:
a configuration of a CPA;
a configuration of a CPC;
a configuration of SCG/PSCell selective activation; and
a configuration corresponding to layer 1 or layer 2 triggered SCG/PSCell mobility.

In a possible design, the first mobility configuration includes at least one of the following information:
a configuration identifier;
an execution condition;
a configuration corresponding to the candidate MCG/PCell, and/or a configuration corresponding to the candidate SCG/PSCell; and
indication information, where the indication information is used for indicating a purpose of a configuration indicated by the information.

In a possible design, the second mobility configuration includes at least one of the following information:
a configuration identifier;
an execution condition;
a configuration corresponding to the candidate MCG/PCell, and/or a configuration corresponding to the candidate SCG/PSCell; and
indication information, where the indication information is used for indicating a purpose of a configuration indicated by the information.

In a possible design, the first mobility configuration includes a configuration corresponding to the candidate MCG/PCell, and the second mobility configuration is carried in the configuration corresponding to the candidate MCG/PCell.

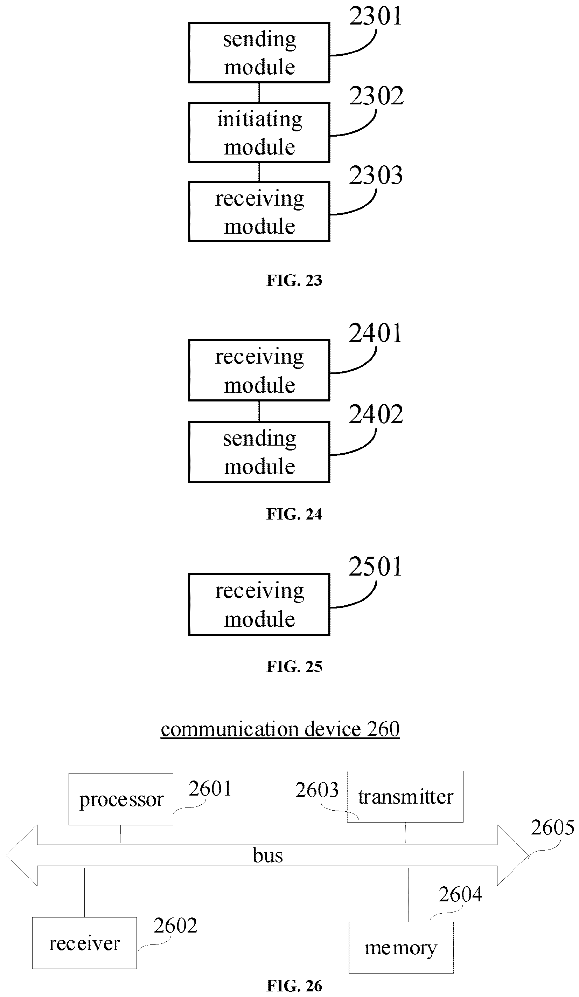

FIG. 23 shows a structural block diagram of a conditional mobility configuration apparatus provided in an exemplary embodiment of the present application. As shown in FIG. 23, the apparatus includes a sending module 2301 configured to send a conditional mobility configuration to an S-MN; where the mobility configuration includes one or more of: an execution condition of a mobility operation, a measurement configuration corresponding to the execution condition of the mobility operation, a configuration of a candidate MCG/PCell, and a configuration of a candidate SCG/PSCell; and the mobility configuration is used for the S-MN to update a measurement configuration of a terminal, and is forwarded by the S-MN to the terminal.

In a possible design, the apparatus further includes an initiating module 2302 configured to determine, through initiating a configuration request of the mobility operation, the execution condition of the mobility operation, and the measurement configuration corresponding to the execution condition of the mobility operation.

In a possible design, the initiating module 2302 is configured to autonomously initiate the configuration request of the mobility operation.

In a possible design, the apparatus further includes a receiving module 2303 configured to receive a request message sent by the S-MN; where the request message is used for requesting the apparatus to initiate a configuration request of the mobility operation.

In a possible design, the apparatus further includes a receiving module 2303 configured to receive a notification message sent by the S-MN; where the notification message is used for requesting the apparatus to update the mobility configuration, or is used for indicating that a measurement identifier corresponding to the execution condition of the mobility operation is unavailable, where the measurement identifier being unavailable includes the measurement identifier being occupied by another measurement identifier.

In a possible design, the notification message carries an available or unavailable measurement identifier; where the available measurement identifier is an unoccupied measurement identifier, and the unavailable measurement identifier is an occupied measurement identifier.

FIG. 24 shows a structural block diagram of a conditional mobility configuration apparatus provided in an exemplary embodiment of the present application. As shown in FIG. 24, the apparatus includes:
a receiving module 2401, configured to receive a conditional mobility configuration sent by a T-MN, where the mobility configuration includes one or more of: an execution condition of a mobility operation, a measurement configuration corresponding to the execution condition of the mobility operation, a configuration of a candidate MCG/PCell, and a configuration of a candidate SCG/PSCell; and
a sending module 2402, configured to update a measurement configuration of a terminal based on the mobility configuration, and send the mobility configuration to the terminal.

In a possible design, the sending module 2402 is configured to send a request message to the T-MN; where the request message is used for requesting the T-MN to initiate a configuration request of the mobility operation to determine the execution condition of the mobility operation, and the measurement configuration corresponding to the execution condition of the mobility operation.

In a possible design, the sending module 2402 is configured to send a notification message to the T-MN; where the notification message is used for requesting the T-MN to update the mobility configuration, or is used for indicating that a measurement identifier corresponding to the execution condition of the mobility operation is unavailable, where the measurement identifier being unavailable includes the measurement identifier being occupied by another measurement identifier.

In a possible design, the notification message carries an available or unavailable measurement identifier; where the available measurement identifier is an unoccupied measurement identifier, and the unavailable measurement identifier is an occupied measurement identifier.

FIG. 25 shows a structural block diagram of a conditional mobility configuration apparatus provided in an exemplary embodiment of the present application. As shown in FIG. 25, the apparatus includes a receiving module 2501 configured to receive a conditional mobility configuration sent by an S-MN; where the mobility configuration is sent by a T-MN to the S-MN; the mobility configuration includes one or more of: an execution condition of a mobility operation, a measurement configuration corresponding to the execution condition of the mobility operation, a configuration of a candidate MCG/PCell, and a configuration of a candidate SCG/PSCell; and the mobility configuration is used for updating a measurement configuration of the apparatus.

It should be noted that when the apparatus provided in the above embodiments implements its functions, only the division of the above-described functional modules is illustrated as an example. In actual applications, the above-described functions may be assigned to be completed by different functional modules according to the actual needs, i.e., the content structure of the device may be divided into different functional modules in order to complete all or a portion of the above-described functions.

With respect to the apparatus in the above embodiments, the specific manner in which each module performs an operation has been described in detail in the embodiments of the methods, and will not be described in detail herein.

FIG. 26 shows a schematic structural diagram of a communication device provided in an exemplary embodiment of the present application. The communication device 260 includes a processor 2601, a receiver 2602, a transmitter 2603, a memory 2604, and a bus 2605.

The processor 2601 includes one or more processing cores. The processor 2601 performs, through running software programs and modules, various functional applications and information processing.

The receiver 2602 and the transmitter 2603 may be implemented as a communication component. The communication component may be a communication chip.

The memory 2604 is connected to the processor 2601 via the bus 2605.

The memory 2604 may be used for storing at least one instruction. The processor 2601 is configured to execute the at least one instruction to implement the steps in the method embodiments described above.

In addition, the memory 2604 may be implemented by any type of volatile or non-volatile storage device or a combination thereof. The volatile or non-volatile storage device includes, but is not limited to, a magnetic disk or an optical disk, an electrically erasable programmable read only memory (EEPROM), an erasable programmable read only memory (EPROM), a static random access memory (SRAM), a read-only memory (ROM), a magnetic memory, a flash memory, and a programmable read-only memory (PROM).

In some embodiments, when the communication device is implemented as a terminal, the processor and the transceiver in the communication device involved in the embodiments of the present application may be implemented together as a communication chip, or the transceiver may form a communication chip alone. In some embodiments, the transmitter in the transceiver performs the sending step performed by the terminal in any of the methods shown above. The receiver in the transceiver performs the receiving step performed by the terminal in any of the methods shown above. The processor performs steps other than the sending step and the receiving step, which will not be repeated herein.

In some embodiments, when the communication device is implemented as a network device, the processor and the transceiver in the communication device involved in the embodiments of the present application may be implemented together as a communication chip, or the transceiver may form a communication chip alone. In some embodiments, the transmitter in the transceiver performs the sending step performed by the network device in any of the methods shown above. The receiver in the transceiver performs the receiving step performed by the network device in any of the methods shown above. The processor performs steps other than the sending step and the receiving step, which will not be repeated herein.

In an exemplary embodiment, there is also provided a computer-readable storage medium. The computer-readable storage medium stores at least one instruction, at least one segment of a program, a code set, or an instruction set. The at least one instruction, the at least one segment of a program, and the code set or instruction set is loaded and executed by a processor to implement the conditional mobility configuration method provided in the method embodiments described above.

In an exemplary embodiment, there is also provided a chip. The chip includes a programmable logic circuit and/or a program instruction. The chip, when run on a communication device, is configured to implement the conditional mobility configuration method provided in the method embodiments described above.

In an exemplary embodiment, there is also provided a computer program product that, when run on a processor of a computer device, causes the computer device to perform the conditional mobility configuration method described above.

Those skilled in the art should be aware that in one or more of the above examples, the functions described in the embodiments of the present application may be implemented by hardware, software, firmware or any combination thereof. When implemented by software, these functions may be stored in a computer-readable medium or transmitted as one or more instructions or code on a computer-readable medium. The computer-readable medium includes a computer storage medium and a communication medium. The communication medium includes any medium that facilitates the transmission of computer programs from one place to another. The storage medium may be any usable medium that can be accessed by a general-purpose computer or a dedicated computer.

The above description is merely an exemplary embodiment of the present application and is not intended to limit the present application. Any modifications, equivalent replacements, improvements, etc. made within the spirit and principles of the present application should all be included within the scope of protection of the present application.

## Claims

1. A conditional mobility configuration method, **characterized in that** the method is performed by a terminal, and the method comprises:
receiving a conditional mobility configuration sent by a network device, wherein the conditional mobility configuration comprises a first mobility configuration and a second mobility configuration, the first mobility configuration is a configuration for master cell group (MCG)/primary cell (PCell) mobility, and the second mobility configuration is a configuration for secondary cell group (SCG)/primary secondary cell (PSCell) mobility; and
performing associative storage on the first mobility configuration corresponding to a candidate MCG/PCell and the second mobility configuration corresponding to a candidate SCG/PSCell.

2. The method according to claim 1, wherein the performing the associative storage on the first mobility configuration corresponding to the candidate MCG/PCell and the second mobility configuration corresponding to the candidate SCG/PSCell comprises:
storing, in a variable corresponding to the candidate MCG/PCell, the first mobility configuration corresponding to the candidate MCG/PCell, and/or the second mobility configuration corresponding to the candidate SCG/PSCell associated with the candidate MCG/PCell.

3. The method according to claim 2, wherein each candidate MCG/PCell corresponds to a separate first variable;
the storing, in the variable corresponding to the candidate MCG/PCell, the first mobility configuration corresponding to the candidate MCG/PCell comprises:
storing, in the first variable corresponding to the candidate MCG/PCell, the first mobility configuration corresponding to the candidate MCG/PCell.

4. The method according to claim 2, wherein each candidate MCG/PCell corresponds to a separate second variable; and
the storing, in the variable corresponding to the candidate MCG/PCell, the second mobility configuration corresponding to the candidate SCG/PSCell associated with the candidate MCG/PCell comprises:
storing, in the second variable corresponding to the candidate MCG/PCell, the second mobility configuration corresponding to the candidate SCG/PSCell associated with the candidate MCG/PCell.

5. The method according to claim 3, wherein the storing, in the first variable corresponding to the candidate MCG/PCell, the first mobility configuration corresponding to the candidate MCG/PCell comprises:
storing, in the first variable corresponding to the candidate MCG/PCell, a measurement configuration corresponding to the candidate MCG/PCell; wherein
the measurement configuration corresponding to the candidate MCG/PCell is determined based on the first mobility configuration.

6. The method according to claim 5, wherein the first mobility configuration comprises a configuration corresponding to the candidate MCG/PCell, and the configuration corresponding to the candidate MCG/PCell comprises the measurement configuration corresponding to the candidate MCG/PCell.

7. The method according to claim 5, wherein the first mobility configuration comprises a configuration corresponding to the candidate MCG/PCell, and the configuration corresponding to the candidate MCG/PCell comprises measurement configuration information corresponding to the candidate MCG/PCell; and
the method further comprises: generating the measurement configuration corresponding to the candidate MCG/PCell based on a measurement configuration of a serving MCG/PCell and the measurement configuration information corresponding to the candidate MCG/PCell.

8. The method according to any one of claims 5 to 7, wherein the method further comprises:
in a process of evaluating an execution condition of the second mobility configuration performed by the terminal, performing measurement based on the measurement configuration stored in the first variable corresponding to the candidate MCG/PCell associated with the second mobility configuration.

9. The method according to claim 3, wherein the first mobility configuration comprises a configuration corresponding to the candidate MCG/PCell, and the configuration corresponding to the candidate MCG/PCell comprises measurement configuration information corresponding to the candidate MCG/PCell; and
the storing, in the first variable corresponding to the candidate MCG/PCell, the first mobility configuration corresponding to the candidate MCG/PCell comprises:
storing, in the first variable corresponding to the candidate MCG/PCell, the measurement configuration information corresponding to the candidate MCG/PCell; wherein
the measurement configuration information corresponding to the candidate MCG/PCell is used for generating a measurement configuration corresponding to the candidate MCG/PCell.

10. The method according to claim 9, wherein the method further comprises:
in a process of evaluating an execution condition of the second mobility configuration performed by the terminal, performing measurement based on a measurement configuration of a serving MCG/PCell and the measurement configuration information corresponding to the candidate MCG/PCell; wherein
the measurement configuration of the serving MCG/PCell and the measurement configuration information corresponding to the candidate MCG/PCell are used for the terminal to generate the measurement configuration corresponding to the candidate MCG/PCell.

11. The method according to claim 4, wherein the first mobility configuration comprises a configuration of a conditional handover (CHO), and the second mobility configuration comprises a configuration of a conditional PSCell addition/change (CPAC); and
the method further comprises:
when the terminal executes the CHO and the CPAC, or the terminal executes the CHO but does not execute the CPAC, clearing all second variables.

12. The method according to any one of claims 3 and 5 to 10, wherein the first mobility configuration comprises a configuration of a CHO, and the second mobility configuration comprises a configuration of a CPAC; and
the method further comprises:
when the terminal executes the CHO and the CPAC, or the terminal executes the CHO but does not execute the CPAC, updating a first variable corresponding to a candidate MCG/PCell that the terminal determines to access to a first variable corresponding to a serving MCG/PCell of the terminal, and/or clearing a first variable corresponding to a candidate MCG/PCell other than the candidate MCG/PCell that the terminal determines to access.

13. The method according to claim 4, wherein the first mobility configuration comprises a configuration of a CHO, and the second mobility configuration comprises a configuration of a CPAC; and
the method further comprises:
when the terminal executes the CHO but does not execute the CPAC, clearing a second variable corresponding to a candidate MCG/PCell other than a candidate MCG/PCell that the terminal determines to access, and/or updating a second variable corresponding to the candidate MCG/PCell that the terminal determines to access to a second variable corresponding to a serving MCG/PCell of the terminal.

14. The method according to any one of claims 1 to 13, wherein a portion of configuration information in the first mobility configuration is used for the terminal to execute a relevant process of the second mobility configuration corresponding to the candidate SCG/PSCell associated with the candidate MCG/PCell.

15. The method according to any one of claims 1 to 13, wherein the first mobility configuration comprises at least one of:
a configuration of a CHO;
a configuration of MCG/PCell selective activation; and
a configuration corresponding to layer 1 or layer 2 triggered MCG/PCell mobility; and
the second mobility configuration comprises at least one of:
a configuration of a conditional PSCell addition (CPA);
a configuration of a conditional PSCell change (CPC);
a configuration of SCG/PSCell selective activation; and
a configuration corresponding to layer 1 or layer 2 triggered SCG/PSCell mobility.

16. The method according to any one of claims 1 to 13, wherein the first mobility configuration and/or the second mobility configuration comprises at least one of the following information:
a configuration identifier;
an execution condition;
a configuration corresponding to the candidate MCG/PCell, and/or a configuration corresponding to the candidate SCG/PSCell; and
indication information, wherein the indication information is used for indicating a purpose of a configuration indicated by the information.

17. The method according to any one of claims 1 to 13, wherein the first mobility configuration comprises a configuration corresponding to the candidate MCG/PCell, and the second mobility configuration is carried in the configuration corresponding to the candidate MCG/PCell.

18. A conditional mobility configuration method, **characterized in that** the method is performed by a network device, and the method comprises:
sending a conditional mobility configuration to a terminal, wherein the conditional mobility configuration comprises a first mobility configuration and a second mobility configuration; wherein
the first mobility configuration is a configuration for master cell group (MCG)/primary cell (PCell) mobility; the second mobility configuration is a configuration for secondary cell group (SCG)/primary secondary cell (PSCell) mobility; and the first mobility configuration corresponding to a candidate MCG/PCell, and the second mobility configuration corresponding to a candidate SCG/PSCell are used for the terminal to perform associative storage.

19. The method according to claim 18, wherein the first mobility configuration comprises a configuration corresponding to the candidate MCG/PCell, and the configuration corresponding to the candidate MCG/PCell comprises a measurement configuration corresponding to the candidate MCG/PCell.

20. The method according to claim 18, wherein the first mobility configuration comprises a configuration corresponding to the candidate MCG/PCell, and the configuration corresponding to the candidate MCG/PCell comprises measurement configuration information corresponding to the candidate MCG/PCell; and
the measurement configuration information corresponding to the candidate MCG/PCell is used for generating a measurement configuration corresponding to the candidate MCG/PCell.

21. The method according to any one of claims 18 to 20, wherein a portion of configuration information in the first mobility configuration is used for the terminal to execute a relevant process of the second mobility configuration corresponding to the candidate SCG/PSCell associated with the candidate MCG/PCell.

22. The method according to any one of claims 18 to 20, wherein the first mobility configuration comprises a configuration corresponding to the candidate MCG/PCell, and the second mobility configuration is carried in the configuration corresponding to the candidate MCG/PCell.

23. A conditional mobility configuration method, **characterized in that** the method is performed by a target master node (T-MN), and the method comprises:
sending a conditional mobility configuration to a source master node (S-MN); wherein
the mobility configuration comprises one or more of: an execution condition of a mobility operation, a measurement configuration corresponding to the execution condition of the mobility operation, a configuration of a candidate master cell group (MCG)/primary cell (PCell), and a configuration of a candidate secondary cell group (SCG)/primary secondary cell (PSCell); and the mobility configuration is used for the S-MN to update a measurement configuration of a terminal, and is forwarded by the S-MN to the terminal.

24. The method according to claim 23, wherein the method further comprises:
determining, through autonomously initiating a configuration request of the mobility operation, the execution condition of the mobility operation, and the measurement configuration corresponding to the execution condition of the mobility operation.

25. The method according to claim 23, wherein the method further comprises:
receiving a request message sent by the S-MN; wherein
the request message is used for requesting the T-MN to initiate a configuration request of the mobility operation to determine the execution condition of the mobility operation, and the measurement configuration corresponding to the execution condition of the mobility operation.

26. The method according to any one of claims 23 to 25, wherein the method further comprises:
receiving a notification message sent by the S-MN; wherein
the notification message is used for requesting the T-MN to update the mobility configuration, or is used for indicating that a measurement identifier corresponding to the execution condition of the mobility operation is unavailable, wherein the measurement identifier being unavailable comprises the measurement identifier being occupied by another measurement identifier.

27. The method according to claim 26, wherein the notification message carries an available or unavailable measurement identifier;
wherein the available measurement identifier is an unoccupied measurement identifier, and the unavailable measurement identifier is an occupied measurement identifier.

28. A conditional mobility configuration method, **characterized in that** the method is performed by a source master node (S-MN), and the method comprises:
receiving a conditional mobility configuration sent by a target master node (T-MN), wherein the mobility configuration comprises one or more of: an execution condition of a mobility operation, a measurement configuration corresponding to the execution condition of the mobility operation, a configuration of a candidate master cell group (MCG)/primary cell (PCell), and a configuration of a candidate secondary cell group (SCG)/primary secondary cell (PSCell); and
updating a measurement configuration of a terminal based on the mobility configuration, and sending the mobility configuration to the terminal.

29. The method according to claim 28, wherein the method further comprises:
sending a request message to the T-MN; wherein
the request message is used for requesting the T-MN to initiate a configuration request of the mobility operation to determine the execution condition of the mobility operation, and the measurement configuration corresponding to the execution condition of the mobility operation.

30. The method according to claim 28 or 29, wherein the method further comprises:
sending a notification message to the T-MN; wherein
the notification message is used for requesting the T-MN to update the mobility configuration, or is used for indicating that a measurement identifier corresponding to the execution condition of the mobility operation is unavailable, wherein the measurement identifier being unavailable comprises the measurement identifier being occupied by another measurement identifier.

31. The method according to claim 30, wherein the notification message carries an available or unavailable measurement identifier;
wherein the available measurement identifier is an unoccupied measurement identifier, and the unavailable measurement identifier is an occupied measurement identifier.

32. A conditional mobility configuration method, **characterized in that** the method is performed by a terminal, and the method comprises:
receiving a conditional mobility configuration sent by a source master node (S-MN);
wherein
the mobility configuration is sent by a target master node (T-MN) to the S-MN; the mobility configuration comprises one or more of: an execution condition of a mobility operation, a measurement configuration corresponding to the execution condition of the mobility operation, a configuration of a candidate master cell group (MCG)/primary cell (PCell), and a configuration of a candidate secondary cell group (SCG)/primary secondary cell (PSCell); and the mobility configuration is used for updating a measurement configuration of the terminal.

33. A conditional mobility configuration apparatus, **characterized in that** the apparatus comprises:
a receiving module, configured to receive a conditional mobility configuration sent by a network device, wherein the conditional mobility configuration comprises a first mobility configuration and a second mobility configuration, the first mobility configuration is a configuration for master cell group (MCG)/primary cell (PCell) mobility, and the second mobility configuration is a configuration for secondary cell group (SCG)/primary secondary cell (PSCell) mobility; and
a storage module, configured to perform associative storage on the first mobility configuration corresponding to a candidate MCG/PCell and the second mobility configuration corresponding to a candidate SCG/PSCell.

34. A conditional mobility configuration apparatus, **characterized in that** the apparatus comprises:
a sending module, configured to send a conditional mobility configuration to a terminal, wherein the conditional mobility configuration comprises a first mobility configuration and a second mobility configuration;
wherein the first mobility configuration is a configuration for master cell group (MCG)/primary cell (PCell) mobility; the second mobility configuration is a configuration for secondary cell group (SCG)/primary secondary cell (PSCell) mobility; and the first mobility configuration corresponding to a candidate MCG/PCell, and the second mobility configuration corresponding to a candidate SCG/PSCell are used for the terminal to perform associative storage.

35. A conditional mobility configuration apparatus, **characterized in that** the apparatus comprises:
a sending module, configured to send a conditional mobility configuration to a source master node (S-MN); wherein
the mobility configuration comprises one or more of: an execution condition of a mobility operation, a measurement configuration corresponding to the execution condition of the mobility operation, a configuration of a candidate master cell group (MCG)/primary cell (PCell), and a configuration of a candidate secondary cell group (SCG)/primary secondary cell (PSCell); and the mobility configuration is used for the S-MN to update a measurement configuration of a terminal, and is forwarded by the S-MN to the terminal.

36. A conditional mobility configuration apparatus, **characterized in that** the apparatus comprises:
a receiving module, configured to receive a conditional mobility configuration sent by a target master node (T-MN), wherein the mobility configuration comprises one or more of: an execution condition of a mobility operation, a measurement configuration corresponding to the execution condition of the mobility operation, a configuration of a candidate master cell group (MCG)/primary cell (PCell), and a configuration of a candidate secondary cell group (SCG)/primary secondary cell (PSCell); and
a sending module, configured to update a measurement configuration of a terminal based on the mobility configuration, and send the mobility configuration to the terminal.

37. A conditional mobility configuration apparatus, **characterized in that** the apparatus comprises:
a receiving module, configured to receive a conditional mobility configuration sent by a source master node (S-MN); wherein
the mobility configuration is sent by a target master node (T-MN) to the S-MN; the mobility configuration comprises one or more of: an execution condition of a mobility operation, a measurement configuration corresponding to the execution condition of the mobility operation, a configuration of a candidate master cell group (MCG)/primary cell (PCell), and a configuration of a candidate secondary cell group (SCG)/primary secondary cell (PSCell); and the mobility configuration is used for updating a measurement configuration of the apparatus.

38. A terminal, **characterized in** comprising:
a processor;
a transceiver, connected to the processor; and
a memory, configured to store an executable instruction of the processor; wherein
the processor is configured to load and execute the executable instruction to implement the conditional mobility configuration method according to any one of claims 1 to 17, or claim 32.

39. A network device, **characterized in** comprising:
a processor;
a transceiver, connected to the processor; and
a memory, configured to store an executable instruction of the processor; wherein
the processor is configured to load and execute the executable instruction to implement the conditional mobility configuration method according to any one of claims 18 to 22, or claims 23 to 27, or claims 28 to 31.

40. A computer-readable storage medium, **characterized in that** the readable storage medium stores an executable instruction, wherein the executable instruction is loaded and executed by a processor to implement the conditional mobility configuration method according to any one of claims 1 to 32.
